# EUROPEAN PATENT APPLICATION

(11) **EP 4 071 524 A1**
(43) Date of publication of application: **12.10.2022**
(21) Application number: 20896110.2
(22) Date of filing: 02.12.2020
(51) Int. Cl.: G02B 3/00

(54) **LENTICULAR OPTICAL COMPOSITE FILM, PREPARATION METHOD THEREFOR, AND 3D DISPLAY**

(30) Priority: 05.12.2019 CN 201911231195
(71) Applicant: Beijing Ivisual 3D Technology Co., Ltd., Beijing 100055 (CN); Visiotech Ventures Pte. Ltd., Singapore 188979 (SG)
(72) Inventor: DIAO, Honghao, Beijing 100055 (CN); HUANG, Lingxi, Singapore 188979 (SG)
(74) Representative: Manitz Finsterwald Patent- und Rechtsanwaltspartnerschaft mbB
(86) International application number: PCT/CN2020/133320
(87) International publication number: WO 2021/110028

(57) **Abstract**

The present application relates to the technical field of 3D display, and discloses a lenticular optical composite film, comprising: a first polarizer; and a lenticular grating, bonded with the first polarizer, including a first lenticular array and a second lenticular array, wherein surfaces, away from each other, of the first lenticular array and the second lenticular array are planes, and surfaces, facing each other, of the first lenticular array and the second lenticular array are concave-convex complementary, and the first polarizer is attached to the lenticular grating. The lenticular optical composite film is easy to clean and laminate, and has a good optical effect. The present application further discloses a 3D display and a preparation method for the lenticular optical composite film.

## Description

The present application claims priority to the Chinese Patent Application with an application number of 201911231195X and a title of *"Lenticular Optical Composite Film, Preparation Method Therefor, and Naked-eye 3D Display",* filed to China National Intellectual Property Administration on December 5th, 2019, the disclosures of which are hereby incorporated by reference.

### Technical Field

The present disclosure relates to the technical field of 3D display, and for example, relates to a lenticular optical composite film, a preparation method therefor, and a 3D display.

### Background

Generally, people realize a 3D display effect by covering a traditional display with gratings, but in an implementation process, there are at least the following problems: display loss caused by technological defect rate, insufficient lamination accuracy, vulnerability and dirt accumulation on surfaces of lenticular gratings, difficulty in mounting and lamination with tools, influence on optical effect or light output, etc.

The background is only for the convenience of understanding related technologies in the field, and is not regarded as an acknowledgment of the existing technology.

### Summary

In order to provide a basic understanding of some aspects of the disclosed embodiments, a brief summary is given below. The summary is not intended to be a general comment, nor to identify key/important components or describe the scope of protection of the embodiments, but to be a preface to the following detailed description.

Embodiments of the present disclosure provide a lenticular optical composite film, a preparation method therefor, and a 3D display, to solve at least some problems existing in related technologies in aspects of laminating, cleaning, optical effect, etc.

According to embodiments of the present disclosure, a lenticular optical composite film is provided, comprising: a first polarizer; and a lenticular grating, bonded with the first polarizer, comprising a first lenticular array and a second lenticular array, wherein surfaces, away from each other, of the first lenticular array and the second lenticular array are planes, and surfaces, facing each other, of the first lenticular array and the second lenticular array are concave-convex complementary, and the first polarizer is attached to the lenticular grating.

The inventor reconfigures a display and components thereof on the basis of 3D display, thereby simplifying overall technological manufacture, and greatly reducing process cost. In the original 3D display, the polarizer and the grating are aligned and laminated with display components respectively in different processes, and the grating is usually made into software, which increases the difficulty in aligning and lamination. The present application bonds the polarizer and the lenticular grating, which are combined separately from a display panel, and the polarizer does not need to be aligned with the lenticular grating, so that the polarizer and the lenticular grating may be laminated onto the display panel at one time, and the process is saved. Furthermore, the bonding of the polarizer and the lenticular grating may increase the hardness of the lenticular grating, which is conducive to the alignment and lamination. By using the lenticular optical composite film of the present application, additional auxiliary aligning tools such as aligning markers, base plates and the like are not needed, so that the technological difficulty is reduced. Outward surfaces of the two lenticular arrays in the lenticular grating are planes, and are easy to clean, and mount and bond by means of an auxiliary mounting tool such as a sucker.

In some embodiments, one lenticular array of the first lenticular array and the second lenticular array is a plano-convex lenticular array, and the other lenticular array is a plano-concave lenticular array, wherein one surface of the plano-convex lenticular array is a plane, and an opposite other surface is formed with a plurality of convex cambered surfaces arranged side by side; or one surface of the plano-concave lenticular array is a plane, and the opposite other surface is formed with a plurality of concave cambered surfaces complementary to the plurality of convex cambered surfaces of the plano-convex lenticular array; and a refractive index of the plano-convex lenticular array is greater than a refractive index of the plano-concave lenticular array.

In some embodiments, a difference n△ between a refractive index of the plano-convex lenticular array and a refractive index of the plano-concave lenticular array is 0.1≤n△≤0.3.

In some embodiments, the refractive index n1 of the plano-convex lenticular array is 1.56≤n1≤1.66; or the refractive index n2 of the plano-concave lenticular array is 1.36≤n2≤1.46.

In some embodiments, the lenticular grating comprises a pair of liners spaced apart, wherein a surface, away from a second liner, of a first liner of the pair of liners is bonded with the first polarizer, the first lenticular array and the second lenticular array are clamped between the pair of liners, and planes of the first lenticular array and the second lenticular array are bonded with one liner of the pair of liners respectively.

In some embodiments, the first polarizer comprises: a pair of support films spaced apart; and a polarizing film clamped between a pair of support films and having an absorption axis, wherein the lenticular grating is bonded with one support film of a pair of support films.

In some embodiments, the lenticular optical composite film further comprises: a protective film attached to a surface, away from the first polarizer, of the lenticular grating.

In some embodiments, the lenticular optical composite film further comprises: a release film attached to a surface, away from the lenticular grating, of the first polarizer.

According to the embodiments of the present disclosure, a 3D display is provided, comprising: a display panel layer; and the above-mentioned lenticular optical composite film, wherein the display panel layer is bonded with a first polarizer of the lenticular optical composite film.

In some embodiments, the display panel layer comprises: a pair of glass substrates spaced apart; a color filter attached to a surface, facing a second glass substrate, of a first glass substrate of a pair of glass substrates; a thin film transistor attached to a surface, facing the first glass substrate, of the second glass substrate; a second polarizer attached to a surface, away from the first glass substrate, of the second glass substrate; and a liquid crystal layer arranged between a pair of glass substrates, wherein the first polarizer of the lenticular optical composite film is attached to a surface, away from the second glass substrate, of the first glass substrate.

According to the embodiments of the present disclosure, a preparation method for a lenticular optical composite film is provided, comprising: forming a lenticular grating; comprising forming a first lenticular array, forming a second lenticular array, making surfaces, facing each other, of the first lenticular array and the second lenticular array concave-convex complementary, and making surfaces, away from each other, of the first lenticular array and the second lenticular array formed into planes; attaching a polarizer to the lenticular grating, so as to obtain the lenticular optical composite film.

In some embodiments, forming the first lenticular array, and forming the second lenticular array comprises: forming one of the first lenticular array and the second lenticular array as a plano-convex lenticular array with one surface being a plane and an opposite other surface being formed with a plurality of convex cambered surfaces arranged side by side; and forming the other one of the first lenticular array and the second lenticular array as a plano-concave lenticular array with one surface being a plane and an opposite other surface being formed with a plurality of concave cambered surfaces complementary to the plurality of convex cambered surfaces of the plano-convex lenticular array, wherein a refractive index of the plano-convex lenticular array is greater than a refractive index of the plano-concave lenticular array.

In some embodiments, the preparation method further comprises: attaching a protective film to a surface, away from the polarizer, of the lenticular grating; or attaching a release film to a surface, away from the lenticular grating, of the polarizer.

In some embodiments, forming the lenticular grating comprises: providing a first liner, a second liner, a first liquid lenticular forming material and a second liquid lenticular forming material; providing a first mold with a first molding surface, wherein the first molding surface is constructed as a plurality of cambered surfaces arranged side by side; providing a second mold with a second molding surface, wherein the second molding surface is constructed as a flat surface; making the first liquid lenticular forming material formed into the first lenticular array on the first liner by means of the first molding surface of the first mold; and making the second liquid lenticular forming material formed into the second lenticular array that is between the first lenticular array and the second liner and is concave-convex complementary to the first lenticular array by means of the second molding surface of the second mold.

In some embodiments, making the first liquid lenticular forming material formed into the first lenticular array on the first liner by means of the first molding surface of the first mold comprises: coating the first liquid lenticular forming material to the first liner; squeezing a surface, away from the first liner, of the first liquid lenticular forming material by the first molding surface of the first mold; and performing curing treatment to the squeezed first liquid lenticular forming material, to form the first lenticular array.

In some embodiments, making the first liquid lenticular forming material formed into the first lenticular array on the first liner by means of the first molding surface of the first mold comprises: positioning the first mold relative to the first liner, so that a gap exists between the first molding surface of the first mold and the first liner; filling the gap with the first liquid lenticular forming material; and performing curing treatment to the first liquid lenticular forming material in the gap, to form the first lenticular array.

In some embodiments, making the second liquid lenticular forming material formed into the second lenticular array that is between the first lenticular array and a second liner material and is concave-convex complementary to the first lenticular array by means of the second molding surface of the second mold comprises: coating the second liquid lenticular forming material to a surface, away from the first liner, of the first lenticular array; squeezing a surface, away from the first lenticular array, of the second liquid lenticular forming material by the second molding surface of the second mold; performing curing treatment to the squeezed second liquid lenticular forming material, to form the second lenticular array that is concave-convex complementary to the first lenticular array; making the second mold leave the second lenticular array; and attaching the second liner to a surface, away from the first lenticular array, of the second lenticular array.

In some embodiments, making the second liquid lenticular forming material formed into the second lenticular array that is between the first lenticular array and the second liner and is concave-convex complementary to the first lenticular array by means of the second molding surface of the second mold comprises: coating the second liquid lenticular forming material to the second liner; attaching a surface, away from the second liner, of the second liquid lenticular forming material to a surface, away from the first liner, of the first lenticular array; squeezing a surface, away from the second liquid lenticular forming material by the second molding surface of the second mold, of the second liner; and performing curing treatment to the squeezed second liquid lenticular forming material, to form the second lenticular array that is concave-convex complementary to the first lenticular array.

In some embodiments, making the second liquid lenticular forming material formed into the second lenticular array that is between the first lenticular array and the second liner and is concave-convex complementary to the first lenticular array by means of the second molding surface of the second mold comprises: positioning the second mold relative to the first lenticular array, so that a gap exists between the second molding surface of the second mold and a surface, away from the first liner, of the first lenticular array; filling the gap with the second liquid lenticular forming material; performing curing treatment to the second liquid lenticular forming material in the gap, to form the second lenticular array that is concave-convex complementary to the first lenticular array; making the second mold leave the second lenticular array; and attaching the second liner to a surface, away from the first lenticular array, of the second lenticular array.

In some embodiments, making the second liquid lenticular forming material formed into the second lenticular array that is between the first lenticular array and the second liner and is concave-convex complementary to the first lenticular array by means of the second molding surface of the second mold comprises: placing the second liner on the second molding surface of the second mold; positioning the second mold relative to the first lenticular array, so that a gap exists between the second liner and a surface, away from the first liner, of the first lenticular array; filling the gap with the second liquid lenticular forming material; and performing curing treatment to the second liquid lenticular forming material in the gap, to form the second lenticular array that is concave-convex complementary to the first lenticular array.

The lenticular optical composite film, the preparation method therefor, and the 3D display provided by the embodiments of the present disclosure may realize effects of easy lamination and cleaning and no influence on optical output.

The above general descriptions and the following detailed descriptions are only exemplary and illustrative, and are not used to limit the present application.

### Description of Drawings

One or more embodiments are illustrated by the corresponding drawings, and the illustrations and drawings do not limit the embodiments. Elements having the same reference numerals in the drawings are shown as similar elements, and the drawings are not intended to limit the scale, wherein:
Fig. 1 is a structural schematic diagram of a 3D display provided by embodiments of the present disclosure;
Fig. 2 is a side view of the 3D display provided by the embodiments of the present disclosure;
Fig. 3 is a structural schematic diagram of a lenticular optical composite film provided by the embodiments of the present disclosure;
Fig. 4 is a structural schematic diagram of a lenticular grating provided by the embodiments of the present disclosure;
Fig. 5 is a structural schematic diagram of a polarizer provided by the embodiments of the present disclosure;
Fig. 6 is a schematic diagram of the polarizer provided by the embodiments of the present disclosure;
Fig. 7 is a structural schematic diagram of the lenticular grating provided by the embodiments of the present disclosure;
Fig. 8 is a preparation flow chart of the lenticular optical composite film provided by the embodiments of the present disclosure;
Fig. 9 is a preparation flow chart of the lenticular optical composite film provided by the embodiments of the present disclosure;
Fig. 10 to Fig. 15 are preparation processes of the lenticular grating provided by the embodiments of the present disclosure;
Fig. 16 is a corresponding flow chart of the preparation process shown in Fig. 10 to Fig. 15;
Fig. 17 are alternative steps of the preparation processes shown in Fig. 10 to Fig. 15;
Fig. 18 to Fig. 22 are preparation processes of the lenticular grating provided by the embodiments of the present disclosure;
Fig. 23 is a corresponding flow chart of the preparation processes shown in Fig. 18 to Fig. 22;
Fig. 24 is a preparation flow chart of the lenticular grating provided by the embodiments of the present disclosure;
Fig. 25 is a preparation flow chart of the lenticular grating provided by the embodiments of the present disclosure;
Fig. 26 is a preparation flow chart of the lenticular grating provided by the embodiments of the present disclosure;
Fig. 27 is a preparation flow chart of the lenticular grating provided by the embodiments of the present disclosure;
Fig. 28 is a preparation flow chart of the lenticular grating provided by the embodiments of the present disclosure;
Fig. 29 is a preparation flow chart of the lenticular grating provided by the embodiments of the present disclosure;
Fig. 30 is a preparation process of the lenticular grating provided by the embodiments of the present disclosure;
Fig. 31 is a corresponding flow chart of the preparation process shown in Fig. 29;
Fig. 32 is a preparation process of the lenticular grating provided by the embodiments of the present disclosure;
Fig. 33 is a corresponding flow chart of the preparation process shown in Fig. 31;
Fig. 34 is a preparation process of the lenticular grating provided by the embodiments of the present disclosure;
Fig. 35 is a corresponding flow chart of the preparation process shown in Fig. 33;
Fig. 36 is a preparation process of the lenticular grating provided by the embodiments of the present disclosure; and
Fig. 37 is a corresponding flow chart of the preparation process shown in Fig. 35.

### Reference numerals:

1: lenticular optical composite film; 10: protective film; 11: lenticular grating; 111: first liner; 112: plano-convex lenticular array; 1121: plano-convex lenticule; 113: plano-concave lenticular array; 1131: plano-concave lenticule; 114: second liner; 115: adhesive layer; 12: polarizer; 121: support film; 122: polarizing film; 123: support film; 124: adhesive layer; A: absorption axis; X: polarizer length; Y: polarizer width; 13: release film; 2: display panel layer; 21: substrate; 22: substrate; 23: thin film transistor; 24: color filter; 25: liquid crystal layer; 26: polarizer; 31: first mold; 311: first molding surface; 312: concave cambered surface; 313: gap; 32: second mold; 321: second molding surface; 322: gap; 41: first liquid lenticular forming material; 42: second liquid lenticular forming material; 51: first adhesive outlet; 52: second adhesive outlet; 61: first curing device; 611: first reflecting housing; 612: first light source; 613: first collimating light modulator; 62: second curing device; 621: second reflecting housing; 622: second light source; 623: second collimating light modulator; 70: material roller; 71: clasping roller; 72: clasping roller; 73: support roller; 74: winding roller; 75: material roller; 76: clasping roller; 77: clasping roller; 78: support roller; 79: support roller; 80: clasping roller; 81: clasping roller.

### Detailed Description

For more detailed understanding of characteristics and technical contents of embodiments of the present disclosure, the implementation of the embodiments of the present disclosure will be described in detail below with reference to the accompanying drawings, and the accompanying drawings are used for reference only, instead of limiting the embodiments of the present disclosure. In the following technical description, for the convenience of illustration, thorough understanding of the disclosed embodiments is provided through several details. However, one or more embodiments may still be implemented without the details. In other cases, to simplify the accompanying drawings, the well-known structures and apparatuses may be displayed briefly.

In embodiments of the present disclosure, "side-by-side arrangement" may refer to an arrangement mode in which two adjacent elements of a group of elements are arranged in sequence without overlapping or slightly overlapping. A plurality of elements in "side-by-side arrangement" may be arranged in sequence on a plane, and may also be arranged in sequence in a circumferential direction (such as a peripheral direction) and other directions.

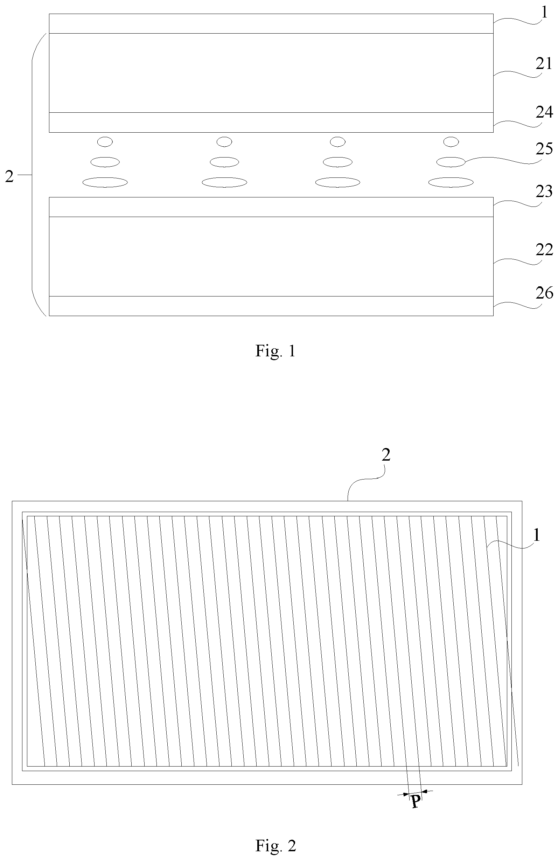

Referring to Fig. 1 and Fig. 2, the embodiments of the present disclosure provide a 3D display (such as a naked-eye 3D display), wherein Fig. 1 is a structural schematic diagram of the 3D display in a form of a sectional view, and Fig. 2 is a structural schematic diagram of the 3D display in a form of a side view. In the shown embodiments, the 3D display comprises a display panel layer 3 and a lenticular optical composite film 1 attached to the display panel layer 2. The display panel layer 2 comprises a pair of substrates 21, 22 spaced apart, and a space between the two substrates 21, 22 is provided with a liquid crystal layer 25. The substrates 21, 22, for example, may be glass substrates. A liquid crystal material may fill between a pair of substrates 21, 22 directly to form the liquid crystal layer 25. A stop member may be provided between the substrates 21, 22 to prevent the liquid crystal layer 25 from overflowing from peripheries of the substrates 21, 22. Or, the liquid crystal material may fill a coating material in advance to form a liquid crystal packet, and then the liquid crystal packet fills between the substrates 21, 22 to form the liquid crystal layer 25. A surface, facing the substrate 22, of the substrate 21 is attached with a color filter 24 and an electrode (comprising a common electrode and a pixel electrode, not shown), and the lenticular optical composite film 1 is attached to a surface, away from the substrate 22, of the substrate 21. The surface, facing the substrate 21, of the substrate 22 is attached with a thin film transistor (TFT) 23, and a surface, away from the substrate 21, of the substrate 22 is attached with another polarizer 26. When current flows through the thin film transistor 23 to generate electric field change, liquid crystal molecule deflection in the liquid crystal layer 25 may be caused, so as to change the deflection polarity of light. One side, away from the substrate 21, of the substrate 22 may also be provided with a backlight source used for providing uniformly bright light for the display panel layer 2.

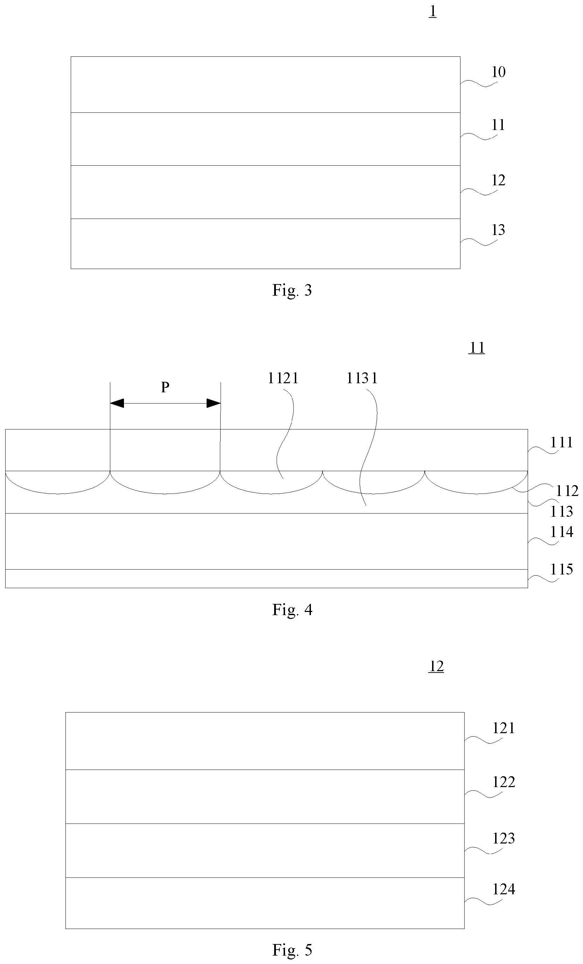

The lenticular optical composite film 1 is attached to a surface of the display panel layer 2, and used for modulating light emitted from the display panel layer 2, so as to produce light-and-shade contrast and multiple viewpoints, thereby providing a realistic 3D visual effect. Fig. 3 shows a structural schematic diagram of a lenticular optical composite film 1 provided according to the embodiments of the present disclosure, wherein the lenticular optical composite film 1 exists in a state of an independent product that is not assembled with the display panel layer 2. In the shown embodiments, a lenticular grating 11 and a polarizer 12 of the lenticular optical composite film 1 are bonded (such as laminated) together, and the bonding way may be, for example, splicing through adhesive such as pressure-sensitive adhesive. For the purpose of convenience of storing and transporting the lenticular optical composite film 1, a protective film 10 is attached to a surface, away from the polarizer 12, of the lenticular grating 11. A release film 13 may also be attached to a surface, away from the lenticular grating 11, of the polarizer 12. The release film 13 may be spliced to the polarizer 12 through, for example, an adhesive in a thickness of 0.10 mm, which hardly has influence on the thickness of the lenticular optical composite film. The adhesive may select a pressure-sensitive adhesive. When the display panel layer 2 is attached with the lenticular optical composite film 1, the release film 13 is removed to expose the adhesive, and then the lenticular optical composite film 1 is spliced to the substrate 21 of the display panel layer 2.

The lenticular grating 11 in the lenticular optical composite film 1, as a light output directional element, can refract the light in different directions. Fig. 4 shows a structural schematic diagram of the lenticular grating 11 provided according to the embodiments of the present disclosure in a form of a sectional view. In the shown embodiments, a plano-convex lenticular array 112 and a plano-concave lenticular array 113 of the lenticular grating 11 are combined to form an edgeless lenticular array. An outer surface (i.e. surfaces, away from each other, of the plano-convex lenticular array 112 and the plano-concave lenticular array 113) of the edgeless lenticular array is a flat surface. Referring to Fig. 4, one side of the plano-convex lenticular array 112 is a plane, the other side is composed of a plurality of convex cambered surfaces, while one side of the plano-concave lenticular array 113 is a plane, and the other side is composed of a plurality of concave cambered surfaces. The concave cambered surfaces of the plano-concave lenticular array 113 and the convex cambered surfaces of the plano-convex lenticular array 112 are complementary to each other. The plano-convex lenticular array 112 may be regarded as a combination of a plurality of side-by-side arranged plano-convex lenticules 1121, each plano-convex lenticule 1121 has a longitudinal axis, and the longitudinal axes of these plano-convex lenticules 1121 are parallel to each other. The plano-concave lenticular array 113 may be regarded as a combination of a plurality of side-by-side arranged plano-concave lenticules 1131, and the longitudinal axes of these plano-concave lenticules 1131 are parallel to each other. Fig. 4 shows the plano-convex lenticular array 112 composed of 5 plano-convex lenticules 1211, and the plano-concave lenticular array 113 composed of 5 plano-concave lenticules 1311, but the specific number may be increased or reduced according to situations.

The plano-convex lenticular array 112 and the plano-concave lenticular array 113 are different in refractive indexes. The difference may be less than a refractive index difference between a conventional lens and air. In the embodiments provided by the present disclosure, the refractive index n1 of the plano-convex lenticular array 112 is greater than the refractive index n2 of the plano-concave lenticular array 113. Optionally, the refractive index difference n△ between the plano-convex lenticular array 112 and the plano-concave lenticular array 113 may be about 0.1 to 0.3, for example, may be about 0.15 to 0.25, or, for example, may be about 0.2. Optionally, the refractive index n1 of the plano-convex lenticular array 112 may be about 1.56 to 1.66, for example, about 1.61. Optionally, the refractive index n2 of the plano-concave lenticular array 113 is about 1.36 to 1.46, for example, about 1.41. The plano-convex lenticular array 112 and the plano-concave lenticular array 113 are concave-convex complementary, and there is no air existing between the plano-convex lenticular array and the plano-concave lenticular array, so as to prevent the large refractive index difference between the air and each lenticular array from producing an adverse effect on the light output of the lenticular grating. The small refractive index difference between the two lenticular arrays that are bonded in a concave-convex complementary manner may reduce the light output interference, and can reduce the dependence of users on a viewing angle when viewing a 3D image, thereby generating greater use degree of freedom. The lenticular array also has smaller reflection ratio, so that the observed image has less interference.

Further referring to Fig. 2, in combination with lenticular spacing P of the plano-convex lenticular array 112 in the lenticular grating 11, the above desirable effect may be further optimized. As shown in Fig. 2 and Fig. 4, the lenticular spacing P is a width, measured in a curvature direction, of the plano-convex lenticule 1121, and is obtained by measuring along the longitudinal axis perpendicular to the plano-convex lenticule 1121. In a multi-viewpoint 3D display, one plano-convex lenticule 1121 may cover a plurality of (composite) pixels or sub-pixels. The plano-convex lenticule is combined (composited) with the pixels or sub-pixels to form multiple viewpoints, such as 4, 5 or 6 viewpoints. The lenticular spacing P may be ranged from 123.000µm to 125.000µm, for example, from 123.500µm to 124.500µm, or for example, may be 124.432µm.

The plano-convex lenticular array 112 in the lenticular grating 11 may be orientated relative to a pixel (subpixel) row or column, for example, the longitudinal axis of any plano-convex lenticule 1121 in the plano-convex lenticular array 112 may be inclined at a certain angle relative to the pixel column. Optionally, an inclination angle is about 5° to 45°, for example, about 10° to 40°, or for example, about 15° to 35°, or for example, about 20° to 30°, or for example, may be 25°. The inclination provides help for reducing moire pattern.

The plano-convex lenticular array 112 and the plano-concave lenticular array 113 may be made of the same or different materials, and the used material may be one of the following materials or any combination of the following materials: an acrylic resin material, a polymer material such as a polycarbonate material or a polyurethane material, a silicone material, an unsaturated polyester material, an epoxy resin material or other suitable transparent materials. The outer surface of the edgeless lenticular array shown in Fig. 4 is attached with liners 111, 114, and the liner 114 away from the plano-convex lenticular array 112 with high refractive index is applied with an adhesive layer 115 such as the pressure-sensitive adhesive, so as to be bonded with the polarizer 12. The liners 111, 114 may be made of thermoplastic polyester material such as a polyethylene terephthalate (PET) material. A thickness of the liners 111, 114 is about 0.1 mm, so as to reduce an overall thickness of the lenticular optical composite film as far as possible. In a case where the edgeless lenticular array composed of the plano-convex lenticular array 112 and the plano-concave lenticular array 113 is firm enough, at least one of the liners 111, 114 may be omitted.

The plano-convex lenticular array 112 and the plano-concave lenticular array 113 according to embodiments of the present disclosure may be non-switchable lenticules, that is, they have intrinsic optical properties. Thus, in any case, the plano-convex lenticular array 112 and the plano-concave lenticular array 113 are always in a lens mode.

Fig. 5 shows a structural schematic diagram of the polarizer provided according to the embodiments of the present disclosure in a form of a sectional view. In the shown embodiments, the polarizer 12 is a laminated structure, and comprises a polarizing film 122 and two support films 121, 123 attached to two opposite surfaces of the polarizing film 122 respectively. The polarizing film 122 may be made of polyvinyl alcohol (PVA), the film may absorb iodine molecules with a bi-directional absorption function, and the iodine molecules are arranged in sequence on the PVA film by extension and alignment, thereby forming the polarizing film with the bi-directional absorption performance. The two support films 121, 123 may select a triacetyl cellulose (TCA) film, so that the extended PVA film is ensured not to be retracted, and the PVA film is also ensured not to be damaged by external substances such as vapor, ultraviolet and the like. The adhesive layer 124 such as the pressure-sensitive adhesive may be coated to the support film (the support film 123 shown in Fig. 4), away from the lenticular grating 11, of the polarizer 12, so as to be bonded with the release film 13 or the display panel layer 2. The two support films 121, 123 may be slightly different in specific chemical compositions, for example, may be a TAC film and a 0-TAC film respectively.

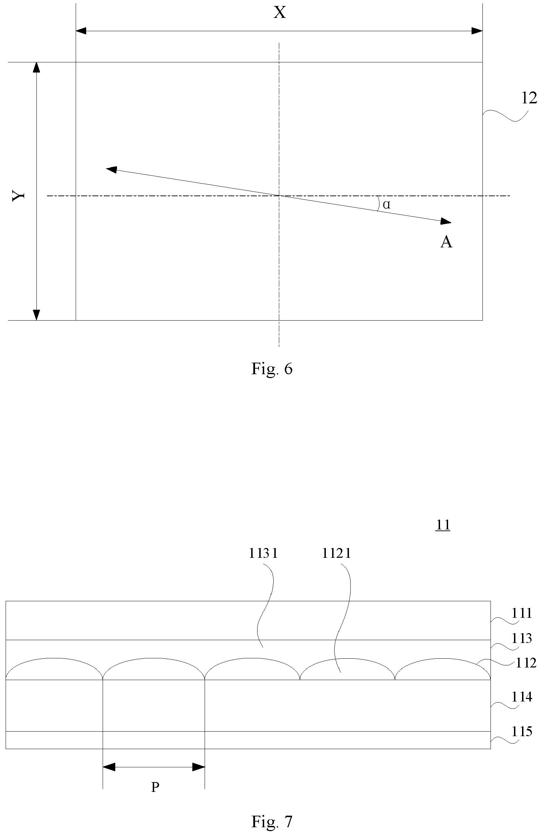

Referring to Fig. 6, Fig. 6 shows a side view of the polarizer provided according to the embodiments of the present disclosure. Optionally, a length X of the polarizer 12 may be about 230.000 to 250.000 mm, for example, about 235.000 to 245.000 mm, or for example, may be about 242.968±0.100 mm. Optionally, a width Y of the polarizer 12 may be about 120.000 to 150.000 mm, for example, about 130.000 to 140.000 mm, or for example, may be about 137.432±0.100 mm. Optionally, the thickness of the polarizer 12 may be about 0.13 to 0.15 mm, or for example, may be about 0.14 mm. Optionally, an angle α between the absorption axis A of the polarizer 12 and the X direction may be about 9° to 11°, for example, about 10°±0.8°.

Embodiments of the present disclosure further provide a method for assembling the 3D display, comprising:
providing the above lenticular optical composite film 1;
providing the display panel layer 2; and
attaching the polarizer 12 of the lenticular optical composite film 1 to a surface, away from the glass substrate 22, of the glass substrate 21 of the display panel layer 2.

In embodiments of the present disclosure, the method for assembling the 3D display further comprises removing the release film from the polarizer.

Fig. 7 shows a structural schematic diagram of another lenticular grating 11 provided according to embodiments of the present disclosure in a form of a sectional view. The lenticular grating 11 in Fig. 7 differs from the lenticular grating 11 in Fig. 4 in that in the lenticular grating of Fig. 7, the polarizer 12 is bonded (such as laminated) to the lenticular grating 11 and is closer to the plano-convex lenticular array 112 than the plano-concave lenticular array 113. The refractive index of the plano-convex lenticular array 112 and the refractive index of the plano-concave lenticular array 113 and the refractive index difference between the two may refer to embodiments shown in Fig. 4.

In the above-mentioned lenticular array, the plano-convex lenticules of the plano-convex lenticular array and the plano-concave lenticules of the plano-concave lenticular array both are a lenticule with an axis. Additionally, the lenticule with two intersected axes (such as two perpendicularly intersected axes) may also be used to form the lenticular grating of embodiments of the present disclosure. In this case, a plurality of plano-concave lenticules with two intersected axes are used to form the plano-concave lenticular array, a plurality of plano-convex lenticules with two intersected axes are used to form the plano-convex lenticular array, the plano-concave lenticular array and the plano-convex lenticular array are bonded together in a concave-convex complementary manner to form the edgeless lenticular array, and the refractive index of the plano-convex lenticular array is greater than the refractive index of the plano-concave lenticular array. The polarizer is attached to the lenticular grating to form the lenticular optical composite film. In some embodiments, the grating may comprise a spherical lens and a concave lens that is concave-convex complementary to the spherical lens. The refractive index of the spherical lens is different from the refractive index of the concave lens. The spherical lens here may also be replaced with a sectional spherical lens.

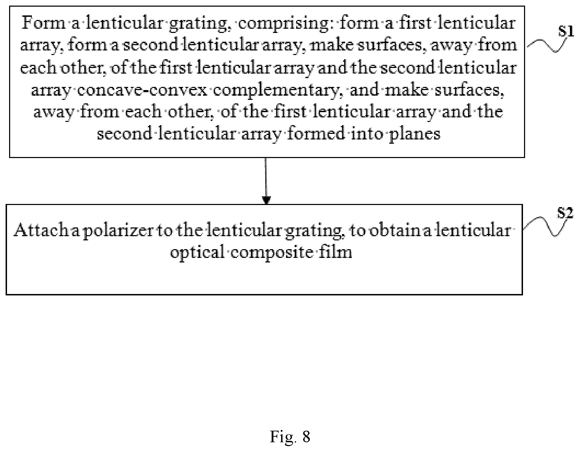

Embodiments of the present disclosure provide a method for preparing a lenticular optical composite film, and as shown in Fig. 8, the method comprises:
S1, forming the lenticular grating; comprising forming a first lenticular array, forming a second lenticular array, making surfaces, facing each other, of the first lenticular array and the second lenticular array concave-convex complementary, and making surfaces, away from each other, of the first lenticular array and the second lenticular array formed into planes; and
S2, attaching the polarizer to the lenticular grating, so as to obtain the lenticular optical composite film.

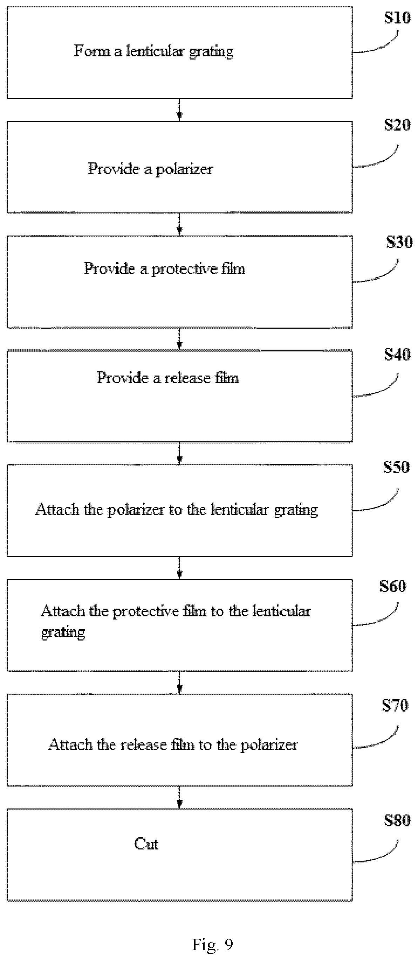

As shown in Fig. 9, in some embodiments, the method for preparing the lenticular optical composite film comprises:
S10, forming the lenticular grating;
S20, providing the polarizer;
S30, providing the protective film;
S40, providing the release film;
S50, attaching the polarizer to the lenticular grating;
S60, attaching the protective film to a surface, away from the polarizer, of the lenticular grating;
S70, attaching the release film to a surface, away from the lenticular grating, of the polarizer; and
S80, performing uniform cutting for a whole body composed of the bonded protective film, lenticular grating, polarizer and release film, to obtain the lenticular optical composite film of the present disclosure.

The preparation method for the lenticular grating is described in detail below with specific examples.

### Example 1

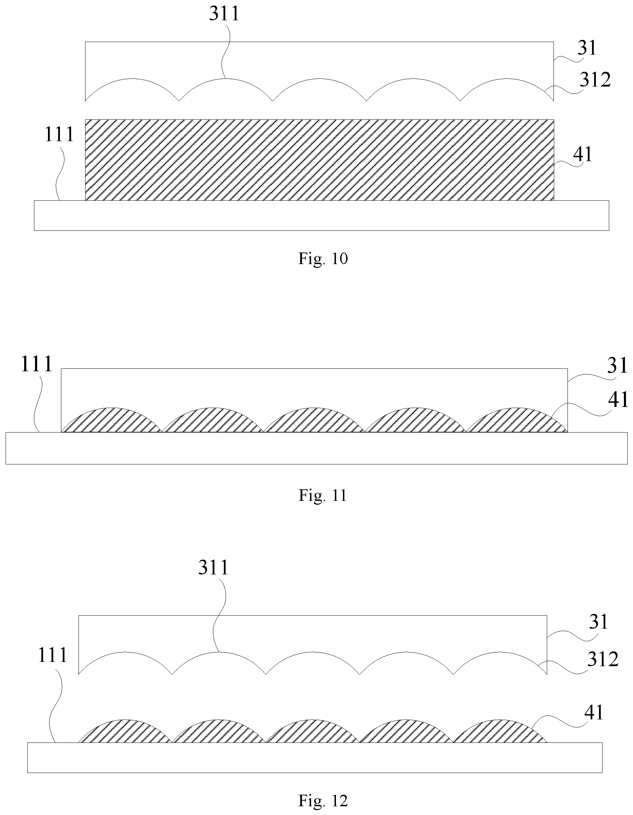

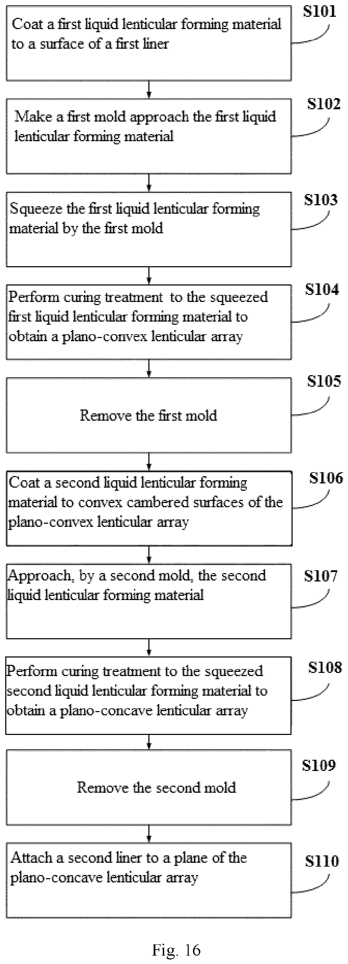

Fig. 10 to Fig. 15 show an exemplary preparation method for the lenticular grating, and Fig. 16 shows a corresponding flow chart.

S101, as shown in Fig. 10, spreading out the first liner 111, coating the first liquid lenticular forming material 41 to the surface of the first liner 111, and making the first liquid lenticular forming material 41 accumulated on the surface of the first liner 111.

S102, still referring to Fig. 10, making the first mold 31 approach the first liquid lenticular forming material 41 at one side, away from the first liner 111, of the first liquid lenticular forming material 41. An approaching speed may be a constant speed, a variable speed or a combination of the constant speed and the variable speed. In the shown embodiments, the first mold 31 is a pressing plate, and one side board is constructed as the first molding surface 311 with a plurality of concave cambered surfaces 312. The plurality of concave cambered surfaces 312 here are designed according to a principle of being consistent with the required structure of the convex cambered surfaces of the plano-convex lenticular array 112.

S103, referring to Fig. 11, squeezing the first liquid lenticular forming material 41 by the first molding surface 311 of the first mold. Limited by the shape of the first molding surface 311 of the first mold 31, the surface, away from the first liner 111, of the first liquid lenticular forming material 41 presents a configuration where a plurality of convex cambered surfaces are arranged side by side.

S104, after obtaining the required convex cambered surface configuration, performing curing treatment to the squeezed first liquid lenticular forming material 41. The curing treatment may be ultraviolet curing treatment. The cured first liquid lenticular forming material 41 is molded into a plano-convex lenticular array.

S105, referring to Fig. 12, after ending curing treatment, removing the first mold 31 to expose the plano-convex lenticular array.

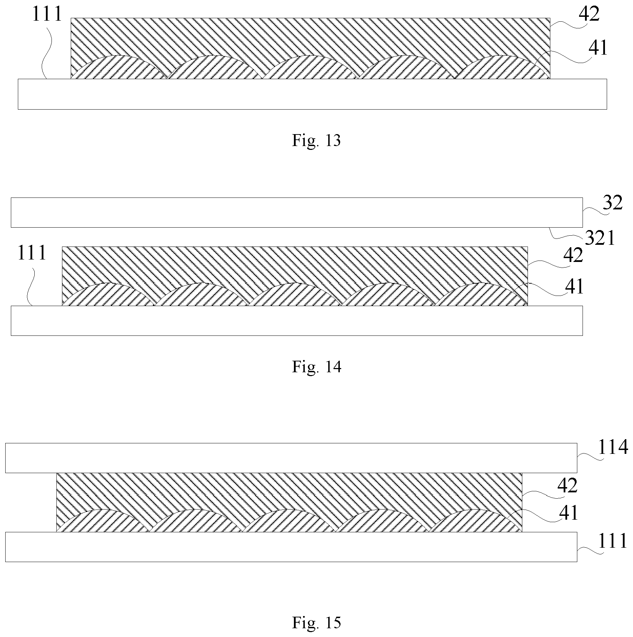

S106, referring to Fig. 13, coating the second liquid lenticular forming material 42 to the convex cambered surfaces of the plano-convex lenticular array, and accumulating the second liquid lenticular forming material 42 on the convex cambered surfaces of the plano-convex lenticular array and conforming to the convex cambered surfaces. The refractive index of the second liquid lenticular forming material 42 is different from the refractive index of the first liquid lenticular forming material 41.

S107, still referring to Fig. 14, approaching, by the second mold 32, the second liquid lenticular forming material 42 at one side, away from the plano-convex lenticular array, of the second liquid lenticular forming material 42. The approaching speed may be a constant speed, a variable speed or a combination of the constant speed and the variable speed. In the shown embodiments, the second mold 32 is a pressing plate, and one side board thereof is constructed as the second molding surface 321 of the flat configuration. The second molding surface 321 is used to squeeze the second liquid lenticular forming material 42. Limited by the shape of the second molding surface 321 of the second mold 32, a surface, away from the plano-convex lenticular array, of the second liquid lenticular forming material 42 presents a flat configuration.

S108, after obtaining the required flat configuration, performing curing treatment to the squeezed second liquid lenticular forming material 42. The curing treatment may be ultraviolet curing treatment. The cured second liquid lenticular forming material 42 is molded into the plano-concave lenticular array, and the plano-concave lenticular array and the plano-convex lenticular array are bonded together in a concave-convex complementary manner.

S109, after ending curing treatment, removing the second mold 32 to expose the plano-concave lenticular array.

S110, referring to Fig. 15, attaching the second liner 114 to the plano-concave lenticular array, thereby preparing the lenticular grating.

In a case where the lenticular grating 11 in the lenticular optical composite film 1 does not need the liners 111, 114, the first liner 111 may be removed after the step S109, and the step S110 is omitted.

Those skilled in the art shall understand that the example 1 may have various variations, for example, in the step S107, a pressing roller may be used to replace the pressing plate as the second mold so as to form the plane of the plano-concave lenticular array. Referring to Fig. 16, an alternative step S107' of the step S107 is shown: pressing a surface, away from the plano-convex lenticular array, of the second liquid lenticular forming material 42 by the second mold 32, and making the second mold 32 roll on a horizontal axis. The second mold may roll in a direction, and may also roll back and forth. The second mold 32 is a pressure roller, and a peripheral surface thereof is constructed as the second molding surface of the flat configuration. The second mold 32 may squeeze and roll the second liquid lenticular forming material 42 in a rolling process, so that a surface, away from the first liner 111, of the second liquid lenticular forming material 42 presents in a plane.

### Example 2

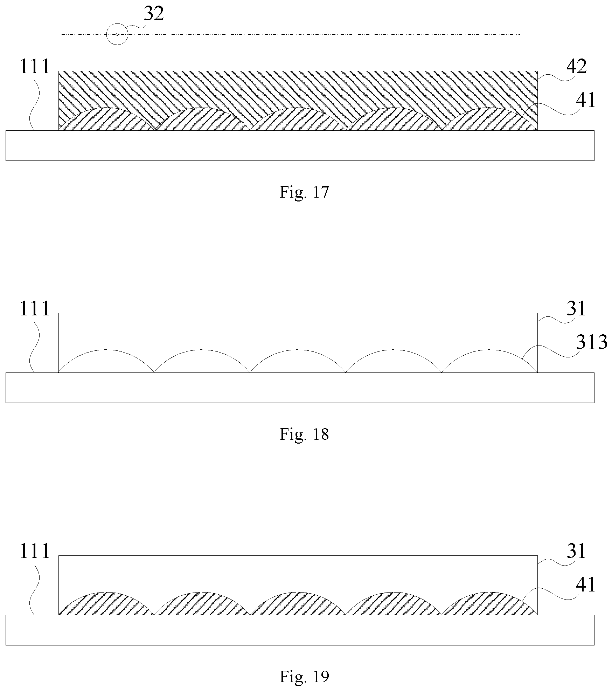

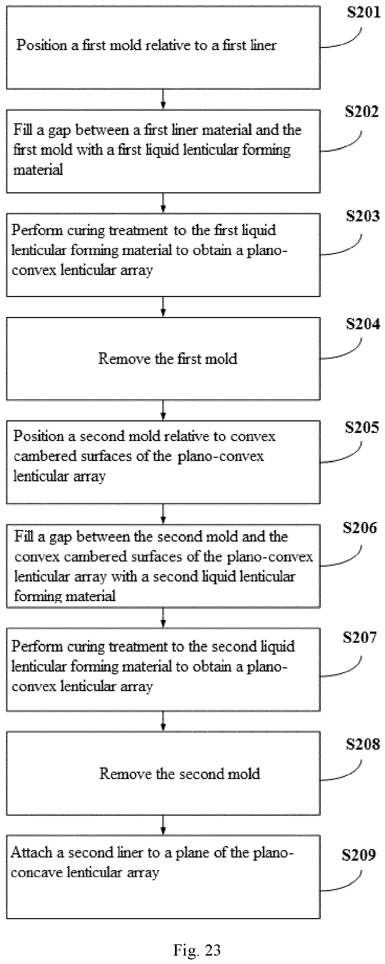

Fig. 18 to Fig. 20 show an exemplary preparation method for the lenticular grating, and Fig. 23 shows a corresponding flow chart.

S201, as shown in Fig. 18, spreading out the first liner 111, and positioning the pressing-plate-shaped first mold 31 relative to the first liner 111, so that a gap 313 exists between the first molding surface 311 of the first mold 31 and the first liner 111.

S202, referring to Fig. 19, filling the gap 313 with the first liquid lenticular forming material 41, so that the first liquid lenticular forming material 41 is accumulated in the gap 313.

S203, further referring to Fig. 19, performing curing treatment to the first liquid lenticular forming material 41 in the gap 313. The cured first liquid lenticular forming material 41 is molded into the plano-convex lenticular array.

S204, after ending curing treatment, removing the first mold 31 to expose the plano-convex lenticular array.

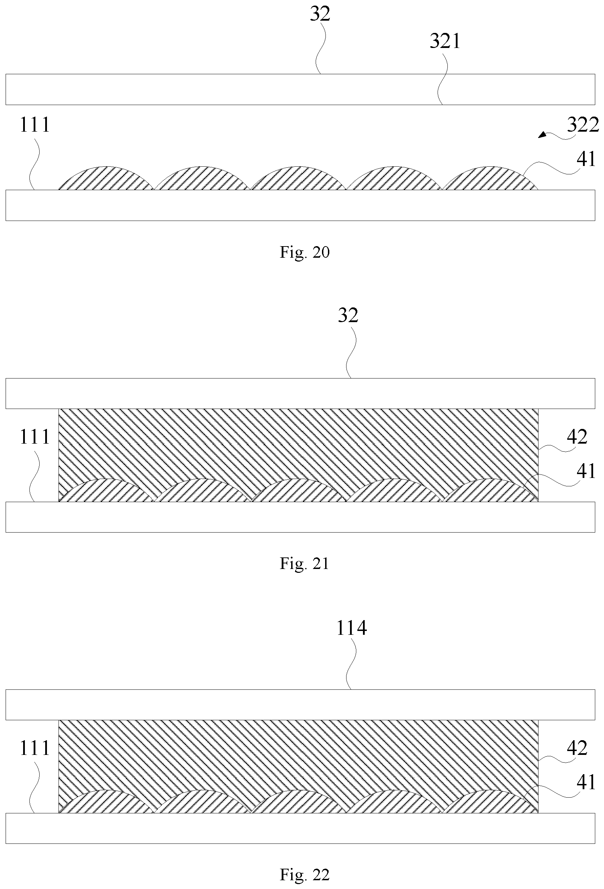

S205, referring to Fig. 20, positioning the pressing-plate-shaped second mold 32 relative to the convex cambered surfaces of the plano-convex lenticular array, so that a gap 322 exists between the second molding surface 321 of the second mold 32 and the convex cambered surfaces.

S206, referring to Fig. 21, filling the gap 322 with the second liquid lenticular forming material 42, so that the second liquid lenticular forming material 42 is accumulated in the gap 322. The refractive index of the second liquid lenticular forming material 42 is different from the refractive index of the first liquid lenticular forming material 41.

S207, further referring to Fig. 22, performing curing treatment to the second liquid lenticular forming material 42 in the gap 322. The cured second liquid lenticular forming material 42 is molded into the plano-concave lenticular array, the plano-concave lenticular array and the plano-convex lenticular array are bonded together in a concave-convex complementary manner, and limited by the shape of the flat board of the second molding surface 321 of the second mold 32, a surface, away from the plano-convex lenticular array, of the plano-concave lenticular array is a plane.

S208, after ending curing treatment, removing the second mold 32 to expose the plano-concave lenticular array.

S209, referring to Fig. 23, attaching the second liner 114 to the plane of the plano-concave lenticular array, thereby preparing the lenticular grating.

In a case where the lenticular grating 11 in the lenticular optical composite film 1 does not need the liners 111, 114, the first liner 111 may be removed after the step S208, and the step S209 is omitted.

### Example 3

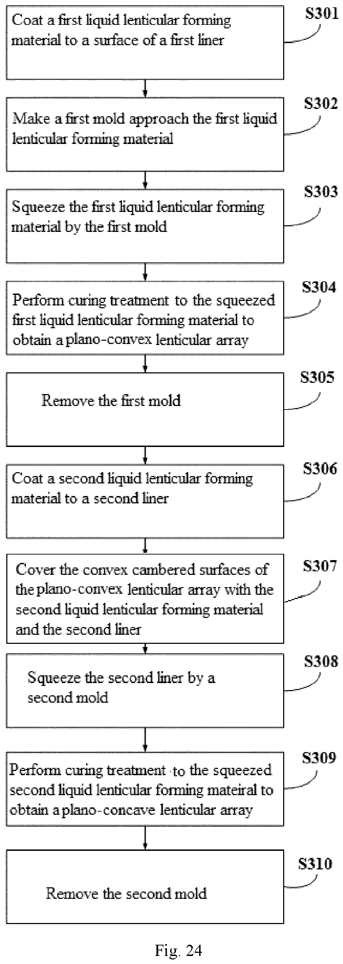

Referring to Fig. 24, an exemplary preparation method for the lenticular grating is described here. Reference numerals involved in the example may refer to the examples 1 and 2.

S301, spreading out the first liner 111, and coating the first liquid lenticular forming material 41 to the surface of the first liner 111, so that the first liquid lenticular forming material 41 is accumulated on the surface of the first liner 111.

S302, making the pressing-plate-shaped first mold 31 approach the first liquid lenticular forming material 41 at one side, away from the first liner 111, of the first liquid lenticular forming material 41.

S303, squeezing the first liquid lenticular forming material 41 by the first molding surface 311 of the first mold 31. Limited by the shape of the first molding surface 311 of the first mold 31, a surface, away from the first liner 111, of the first liquid lenticular forming material 41 presents a configuration where a plurality of convex cambered surfaces are arranged side by side.

S304, after obtaining the required convex cambered surface configuration, performing curing treatment to the squeezed first liquid lenticular forming material 41. The cured first liquid lenticular forming material 41 is molded into the plano-convex lenticular array.

S305, after ending curing treatment, removing the first mold 31 to expose the plano-convex lenticular array.

S306, coating the second liquid lenticular forming material 42 to the second liner 114, and making the second liquid lenticular forming material 42 accumulated on the second liner 114. The refractive index of the second liquid lenticular forming material 42 is different from the refractive index of the first liquid lenticular forming material 41.

S307, covering the convex cambered surfaces of the plano-convex lenticular array together with the second liner 114 by the second liquid lenticular forming material 42, and making the second liquid lenticular forming material 42 attached to and conforming to the convex cambered surfaces.

S308, squeezing the surface, away from the first liner 111, of the second liner 114 by the pressing-plate-shaped second mold 32, and further squeezing the second liquid lenticular forming material 42. Limited by the shape of the second molding surface 321 of the second mold 32, a surface, away from the first liner 111, of the second liquid lenticular forming material 42 presents a flat configuration.

S309, after obtaining the required flat configuration, performing curing treatment to the squeezed second liquid lenticular forming material 42. The cured second liquid lenticular forming material 42 is molded into the plano-concave lenticular array, and the plano-concave lenticular array and the plano-convex lenticular array are bonded together in a concave-convex complementary manner.

S310, after ending curing treatment, removing the second mold 32. Thus, the lenticular grating is prepared.

In a case where the lenticular grating 11 in the lenticular optical composite film 1 does not need the first liner 111 and the second liner 114, the first liner 111 and the second liner 114 may be removed after the step S310.

### Example 4

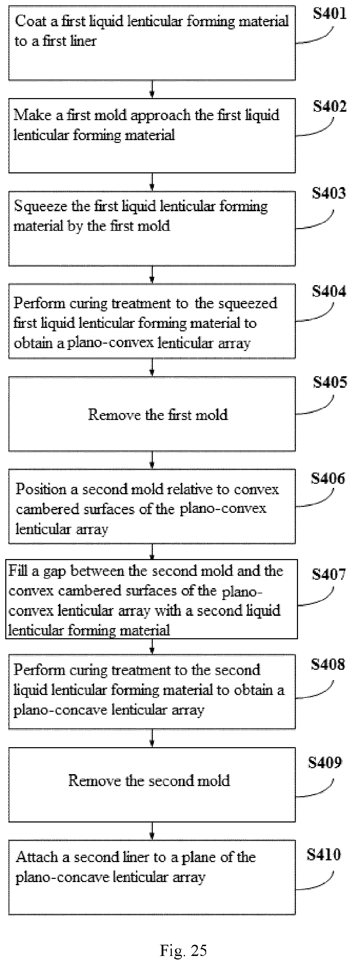

Referring to Fig. 25, an exemplary preparation method for the lenticular grating is described here. Reference numerals involved in the example may refer to the examples 1 and 2.

S401, spreading out the first liner 111, and coating the first liquid lenticular forming material 41 to the surface of the first liner 111, so that the first liquid lenticular forming material 41 is accumulated on the surface of the first liner 111.

S402, making the pressing-plate-shaped first mold 31 approach the first liquid lenticular forming material 41 at one side, away from the first liner 111, of the first liquid lenticular forming material 41.

S403, squeezing the first liquid lenticular forming material 41 by the first molding surface 311 of the first mold 31. Limited by the shape of the first molding surface 311 of the first mold 31, a surface, away from the first liner 111, of the first liquid lenticular forming material 41 presents a configuration where a plurality of convex cambered surfaces are arranged side by side.

S404, after obtaining the required convex cambered surface configuration, performing curing treatment to the squeezed first liquid lenticular forming material 41. The cured first liquid lenticular forming material 41 is molded into the plano-convex lenticular array.

S405, after ending curing treatment, removing the first mold 31 to expose the plano-convex lenticular array.

S406, positioning the pressing-plate-shaped second mold 32 relative to the convex cambered surfaces of the plano-convex lenticular array, so that a gap 322 exists between the second molding surface 321 of the second mold 32 and the convex cambered surfaces.

S407, filling the gap 322 with the second liquid lenticular forming material 42, so that the second liquid lenticular forming material 42 is accumulated in the gap 322. The refractive index of the second liquid lenticular forming material 42 is different from the refractive index of the first liquid lenticular forming material 41.

S408, performing curing treatment to the second liquid lenticular forming material 42 in the gap 322. The cured second liquid lenticular forming material 42 is molded into the plano-concave lenticular array, the plano-concave lenticular array and the plano-convex lenticular array are bonded together in a concave-convex complementary manner, and limited by the shape of the flat board of the second molding surface 321 of the second mold 32, a surface, away from the plano-convex lenticular array, of the plano-concave lenticular array is a plane.

S409, after ending curing treatment, removing the second mold 32 to expose the plano-concave lenticular array.

S410, attaching the second liner 114 to the plane of the plano-concave lenticular array. Thus, the lenticular grating is prepared.

In a case where the lenticular grating 11 in the lenticular optical composite film 1 does not need the liners 111, 114, the first liner 111 may be removed after the step S409, and the step S410 is omitted.

### Example 5

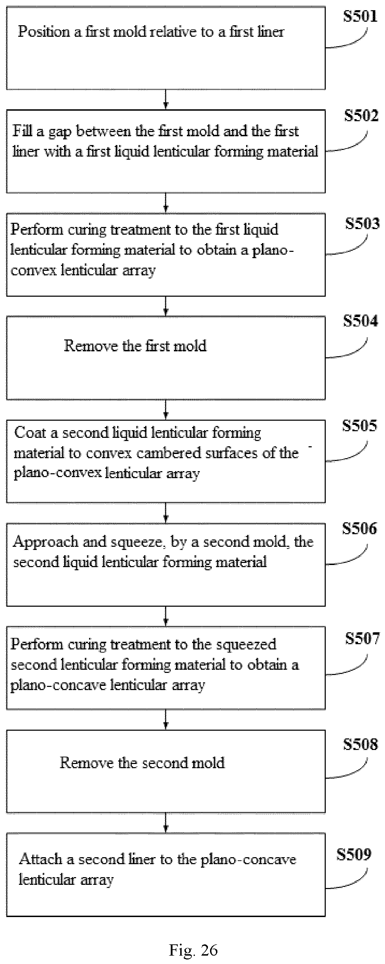

Referring to Fig. 26, an exemplary preparation method for the lenticular grating is described here. Reference numerals involved in the example may refer to the examples 1 and 2.

S501, spreading out the first liner 111, and positioning the pressing-plate-shaped first mold 31 relative to the first liner 111, so that a gap 313 exists between the first molding surface 311 of the first mold 31 and the first liner 111.

S502, filling the gap 313 with the first liquid lenticular forming material 41, so that the first liquid lenticular forming material 41 is accumulated in the gap 313.

S503, performing curing treatment to the first liquid lenticular forming material 41 in the gap 313. The cured first liquid lenticular forming material 41 is molded into the plano-convex lenticular array.

S504, after ending curing treatment, removing the first mold 31 to expose the plano-convex lenticular array.

S505, coating the second liquid lenticular forming material 42 to the convex cambered surfaces of the plano-convex lenticular array, and making the second liquid lenticular forming material 42 accumulated on the convex cambered surfaces of the plano-convex lenticular array and conforming to the convex cambered surfaces. The refractive index of the second liquid lenticular forming material 42 is different from the refractive index of the first liquid lenticular forming material 41.

S506, approaching, by the pressing-plate-shaped second mold 32, the second liquid lenticular forming material 42 at one side, away from the plano-convex lenticular array, of the second liquid lenticular forming material 42, and squeezing the second liquid lenticular forming material 42 by the second molding surface 321 of the second mold 32. Limited by the shape of the second molding surface 321 of the second mold 32, a surface, away from the first liner 111, of the second liquid lenticular forming material 42 presents a flat configuration.

S507, after obtaining the required flat configuration, performing curing treatment to the squeezed second liquid lenticular forming material 42. The cured second liquid lenticular forming material 42 is molded into the plano-concave lenticular array, and the plano-concave lenticular array and the plano-convex lenticular array are bonded together in a concave-convex complementary manner.

S508, after ending curing treatment, removing the second mold 32 to expose the plano-concave lenticular array.

S509, attaching the second liner 114 to the plane of the plano-concave lenticular array. Thus, the lenticular grating is prepared.

In a case where the lenticular grating 11 in the lenticular optical composite film 1 does not need the liners 111, 114, the first liner 111 may be removed after the step S508, and the step S509 is omitted.

### Example 6

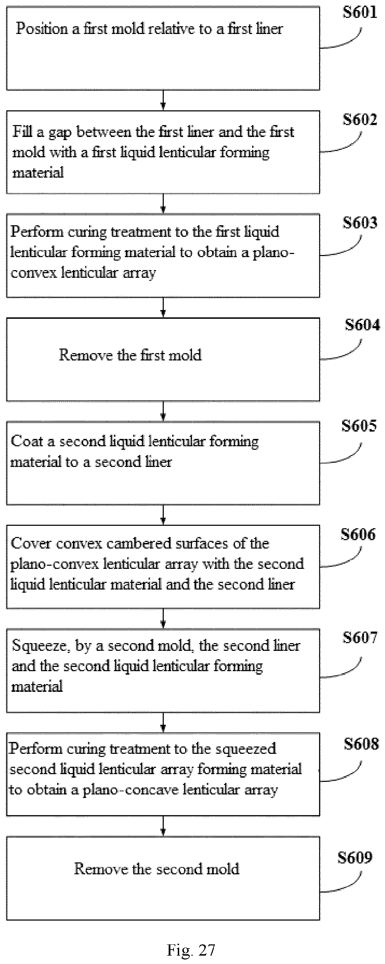

Referring to Fig. 27, an exemplary preparation method for the lenticular grating material is described here. Reference numerals involved in the example may refer to the examples 1 and 2.

S601, spreading out the first liner 111, and positioning the pressing-plate-shaped first mold 31 relative to the first liner 111, so that a gap 313 exists between the first molding surface 311 of the first mold 31 and the first liner 111.

S602, filling the gap 313 with the first liquid lenticular forming material 41, so that the first liquid lenticular forming material 41 is accumulated in the gap 313.

S603, performing curing treatment to the first liquid lenticular forming material 41 in the gap 313. The cured first liquid lenticular forming material 41 is molded into the plano-convex lenticular array.

S604, after ending curing treatment, removing the first mold 31 to expose the plano-convex lenticular array.

S605, coating the second liquid lenticular forming material 42 to the second liner 114, so that the second liquid lenticular forming material 42 is accumulated on the second liner 114. The refractive index of the second liquid lenticular forming material 42 is different from the refractive index of the first liquid lenticular forming material 41.

S606, covering the convex cambered surfaces of the plano-convex lenticular array together with the second liner 114 by the second liquid lenticular forming material 42, and making the second liquid lenticular forming material 42 attached to and conforming to the convex cambered surfaces.

S607, squeezeing the surface, away from the first liner 111, of the second liner 114 by the pressing-plate-shaped second mold 32, and further squeezing the second liquid lenticular forming material 42. Limited by the shape of the second molding surface 321 of the second mold 32, a surface, away from the first liner 111, of the second liquid lenticular forming material 42 presents a flat configuration.

S608, after obtaining the required flat configuration, performing curing treatment to the squeezed second liquid lenticular forming material 42. The cured second liquid lenticular forming material 42 is molded into the plano-concave lenticular array, and the plano-concave lenticular array and the plano-convex lenticular array are bonded together in a concave-convex complementary manner.

S609, after ending curing treatment, removing the second mold 32. Thus, the lenticular grating is prepared.

In a case where the lenticular grating 11 in the lenticular optical composite film 1 does not need the liners 111, 114, the first liner 111 and the second liner 114 may be removed after the step S609.

### Example 7

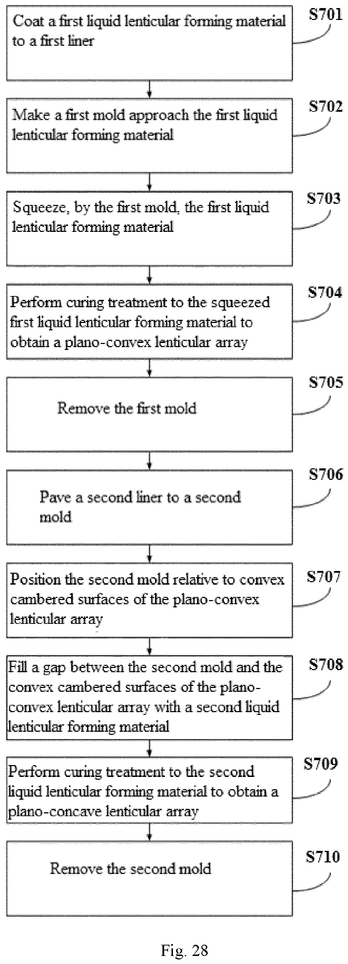

Referring to Fig. 28, an exemplary preparation method for the lenticular grating is described here. Reference numerals involved in the example may refer to the examples 1 and 2.

S701, spreading out the first liner 111, and coating the first liquid lenticular forming material 41 to the surface of the first liner 111, so that the first liquid lenticular forming material 41 is accumulated on the surface of the first liner 111.

S702, making the pressing-plate-shaped first mold 31 approach the first liquid lenticular forming material 41 at one side, away from the first liner 111, of the first liquid lenticular forming material 41.

S703, squeezing the first liquid lenticular forming material 41 by the first molding surface 311 of the first mold 31. Limited by the shape of the first molding surface 311 of the first mold 31, a surface, away from the first liner 111, of the first liquid lenticular forming material 41 presents a configuration where a plurality of convex cambered surfaces are arranged side by side.

S704, after obtaining the required convex cambered surface configuration, performing curing treatment to the squeezed first liquid lenticular forming material 41. The cured first liquid lenticular forming material 41 is molded into the plano-convex lenticular array.

S705, after endingcuring treatment, removing the first mold 31 to expose the plano-convex lenticular array.

S706, fixedly paving the second liner 114 to the second molding surface 321 of the pressing-plate-shaped second mold 32.

S707, positioning the pressing-plate-shaped second mold 32 relative to the convex cambered surfaces of the plano-convex lenticular array, so that a gap 322 exists between the second liner 114 and the convex cambered surfaces.

S708, filling the gap 322 with the second liquid lenticular forming material 42, so that the second liquid lenticular forming material 42 is accumulated in the gap 322. The refractive index of the second liquid lenticular forming material 42 is different from the refractive index of the first liquid lenticular forming material 41.

S709, performing curing treatment to the second liquid lenticular forming material 42 in the gap 322. The cured second liquid lenticular forming material 42 is molded into the plano-concave lenticular array, the plano-concave lenticular array and the plano-convex lenticular array are bonded together in a concave-convex complementary manner, and limited by the shape of the second molding surface of the second mold 32, a surface, away from the plano-convex lenticular array, of the plano-concave lenticular array presents a plane configuration.

S710, after ending curing treatment, removing the second mold 32. Thus, the lenticular grating is prepared.

In a case where the lenticular grating 11 in the lenticular optical composite film 1 does not need the first liner 111 and the second liner 114, the first liner 111 and the second liner 114 may be removed after the step S710.

### Example 8

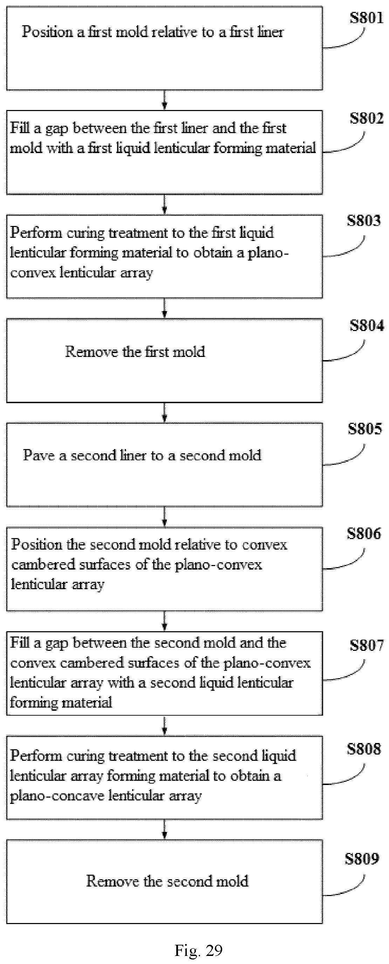

Referring to Fig. 29, an exemplary preparation method for the lenticular grating is described here. Reference numerals involved in the example may refer to the examples 1 and 2.

S801, spreading out the first liner 111, and positioning the pressing-plate-shaped first mold 31 relative to the first liner 111, so that a gap 313 exists between the first molding surface 311 of the first mold 31 and the first liner 111.

S802, filling the gap 313 with the first liquid lenticular forming material 41, so that the first liquid lenticular forming material 41 is accumulated in the gap 313.

S803, performing curing treatment to the first liquid lenticular forming material 41 in the gap 313. The cured first liquid lenticular forming material 41 is molded into the plano-convex lenticular array.

S804, after ending curing treatment, removing the first mold 31 to expose the plano-convex lenticular array.

S805, fixedly paving the second liner 114 to the second molding surface 321 of the pressing-plate-shaped second mold 32.

S806, positioning the pressing-plate-shaped second mold 32 relative to the convex cambered surfaces of the plano-convex lenticular array, so that a gap 322 exists between the second liner 114 and the convex cambered surfaces.

S807, filling the gap 322 with the second liquid lenticular forming material 42, so that the second liquid lenticular forming material 42 is accumulated in the gap 322. The refractive index of the second liquid lenticular forming material 42 is different from the refractive index of the first liquid lenticular forming material 41.

S808, performing curing treatment to the second liquid lenticular forming material 42 in the gap 322. The cured second liquid lenticular forming material 42 is molded into the plano-concave lenticular array, the plano-concave lenticular array and the plano-convex lenticular array are bonded together in a concave-convex complementary manner, and limited by the shape of the second molding surface of the second mold 32, a surface, away from the plano-convex lenticular array, of the plano-concave lenticular array presents a plane configuration.

S809, after ending curing treatment, removing the second mold 32. Thus, the lenticular grating is prepared.

In a case where the lenticular grating 11 in the lenticular optical composite film 1 does not need the first liner 111 and the second liner 114, the first liner 111 and the second liner 114 may be removed after the step S809.

### Example 9

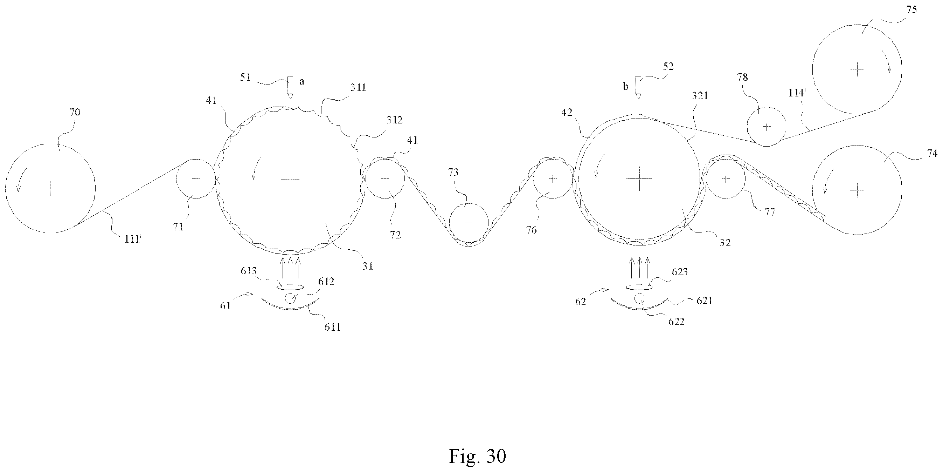

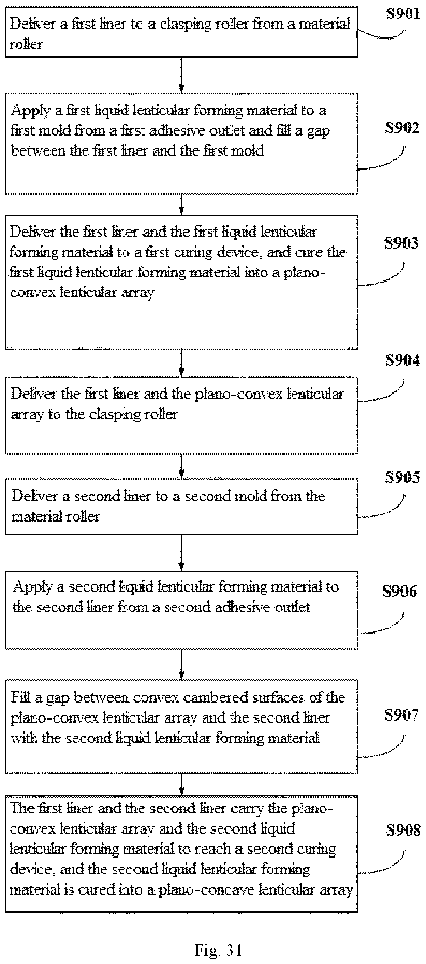

Fig. 30 shows an exemplary preparation method for the lenticular grating, and Fig. 31 shows a corresponding flow chart. In an apparatus used in the method, material rollers 70 and 75 are used respectively for accommodating winding materials of the first liner 111 and the second liner 114. The first mold 31 is constructed as the pressure roller, and the peripheral surface of the pressure roller is formed with a plurality of concave cambered surfaces 312 arranged side by side along the peripheral direction so as to define the first molding surface 311. The first mold 31 is arranged nearby a clasping roller 71, and a roller gap is formed between the first molding surface 311 of the first mold 31 and the peripheral surface of the clasping roller 71. The second mold 32 is constructed as a pressure roller, and the peripheral surface of the pressure roller is a flat surface so as to form the second molding surface. The second mold 32 is arranged nearby the clasping roller 76, and a roller gap is formed between the second molding surface of the second mold 32 and the peripheral surface of the clasping roller 76. The apparatus further comprises two curing devices 61, 62. The first curing device 61 is located at the downstream of the clasping roller 71 and is close to the first mold 31, and comprises a first light source 612, a first reflecting housing 611 and a first collimating light modulator 613. The second curing device 62 is located at the downstream of the clasping roller 76 and is close to the second mold 32, and comprises a second light source 622, a second reflecting housing 621 and a second collimating light modulator 623.

A process for preparing the lenticular grating according to the present example comprises the following steps:

S901, The material roller 70 rotates along an arrow direction to release the first liner 111, and the first liner 111 is delivered to the clasping roller 71.

S902, The first liquid lenticular forming material 41 is applied to the peripheral surface of the first mold 31 by a first adhesive outlet 51 at position a. With the rotation of the first mold 31 along the arrow direction, the first liquid lenticular forming material 41 fills the gap between the first liner 111 and the first molding surface 311. At the clasping roller 71, the first liquid lenticular forming material 41 begins to be bonded with the first liner 111.

S903, The first liner 111 bonded with the first liquid lenticular forming material 41 marches forward to the first curing device 61. Under the action of the first curing device 61, the first liquid lenticular forming material 41 is cured into the plano-convex lenticular array.

S904, The first liner 111 bonded with the plano-convex lenticular array is delivered to the clasping roller 76 after passing through a clasping roller 72 and a support roller 73.

S905, The material roller 75 rotates along the arrow direction to release the second liner 114, and the second liner 114 is delivered to the flat peripheral surface of the second mold 32 through the support roller 78.

S906, A second adhesive outlet 52 at position b applies the second liquid lenticular forming material 42 to the surface of the second liner 114. The refractive index of the second liquid lenticular forming material 42 is different from the refractive index of the first liquid lenticular forming material 41.

S907, With the rotation of the second mold 32 along the arrow direction, the second liquid lenticular forming material 42 fills the gap between the plurality of convex cambered surfaces of the plano-convex lenticular array and the second liner 114. Under the action of the clasping roller 76, the second liquid lenticular forming material 42 begins to be bonded with the convex cambered surfaces of the plano-convex lenticular array and conforms to the convex cambered surfaces.

S908, The first liner 111 and the second liner 114 carry the plano-convex lenticular array and the second liquid lenticular forming material 42 to march forward to the second curing device 62. Under the action of the second curing device 62, the second liquid lenticular forming material 42 is cured into the plano-concave lenticular array, the plano-concave lenticular array and the plano-convex lenticular array are bonded together in a concave-convex complementary manner, and limited by the shape of the second molding surface of the second mold 32, a surface, away from the plano-convex lenticular array, of the plano-concave lenticular array presents in plane configuration. Thus, the lenticular grating is prepared.

Thereafter, the lenticular grating may be delivered to a winding roller 74 through the clasping roller 77.

### Example 10

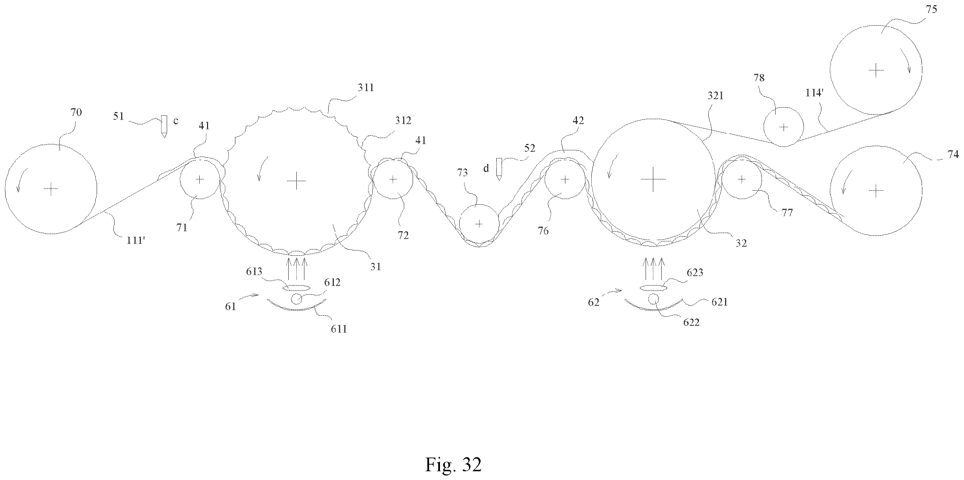

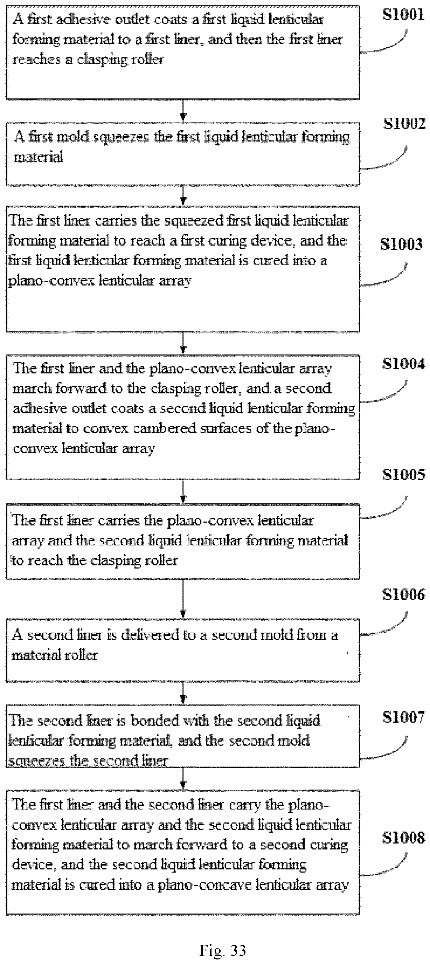

Fig. 32 shows an exemplary preparation method for the lenticular grating, and Fig. 33 shows a corresponding flow chart. The apparatus used in the method differs from the apparatus in Fig. 29 in that the first adhesive outlet 51 is not arranged at the position a, but arranged between the material roller 70 and the clasping roller 71, for example, at position c, and the second adhesive outlet 52 is not arranged at the position b, but arranged between the clasping roller 72 and the clasping roller 76, for example, at position d.

The process for preparing the lenticular grating according to the present example comprises the following steps:

S1001, The material roller 70 rotates along the arrow direction to release the first liner 111, and the first adhesive outlet 51 at the position c coats the first liquid lenticular forming material 41 to the surface of the first liner 111. The first liner 111 carries the first liquid lenticular forming material 41 to reach the clasping roller 71.

S1002, The first mold 31 rotates along the arrow direction. From the clasping roller 71, the first mold 31 squeezes the first liquid lenticular forming material 41 by means of the first molding surface 311, so that a surface, away from the first liner 111, of the first liquid lenticular forming material 41 presents a plurality of convex cambered surfaces arranged side by side.

S1003, The first liner 111 carries the squeezed first liquid lenticular forming material 41 to reach the first curing device 61. Under the action of the first curing device 61, the first liquid lenticular forming material 41 is cured into the plano-convex lenticular array.

S1004, The first liner 111 bonded with the plano-convex lenticular array marches forward to the clasping roller 76 after passing through the clasping roller 72 and the support roller 73. The second adhesive outlet 52 at the position d coats the second liquid lenticular forming material 42 to the plurality of convex cambered surfaces of the plano-convex lenticular array. The refractive index of the second liquid lenticular forming material 42 is different from the refractive index of the first liquid lenticular forming material 41. The second liquid lenticular forming material 42 is accumulated on the convex cambered surfaces of the plano-convex lenticular array and conforms to the convex cambered surfaces of the plano-convex lenticular array.

S1005, The first liner 111 carries the plano-convex lenticular array and the second liquid lenticular forming material 42 to reach the clasping roller 76.

S1006, The material roller 75 rotates along the arrow direction to release the second liner 114, and the second liner 114 is delivered to the peripheral surface of the second mold 32 through the support roller 78.

S1007, From the clasping roller 76, the second liner 114 begins to be bonded with the second liquid lenticular forming material 42, and the second mold 32 squeezes the surface of the second liner 114 by means of the second molding surface 321, thereby squeezing the second liquid lenticular forming material 42.

S1008, The first liner 111 and the second liner 114 carry the plano-convex lenticular array and the squeezed second liquid lenticular forming material 42 to march forward to the second curing device 62. Under the action of the second curing device 62, the second liquid lenticular forming material 42 is cured into the plano-concave lenticular array, the plano-concave lenticular array and the plano-convex lenticular array are bonded together in a concave-convex complementary manner, and limited by the shape of the second molding surface of the second mold 32, a surface, away from the plano-convex lenticular array, of the plano-concave lenticular array presents a plane configuration. Thus, the lenticular grating is prepared.

Thereafter, the lenticular grating is delivered to the winding roller 74 through the clasping roller 77.

### Example 11

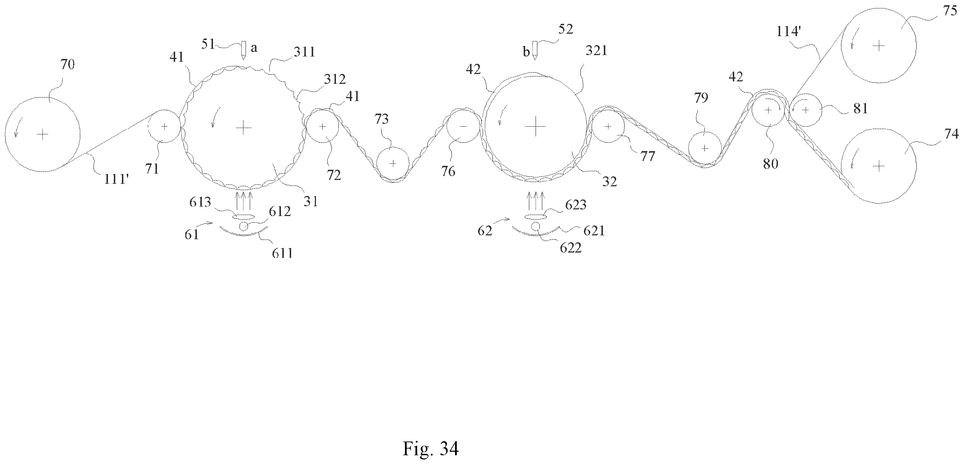

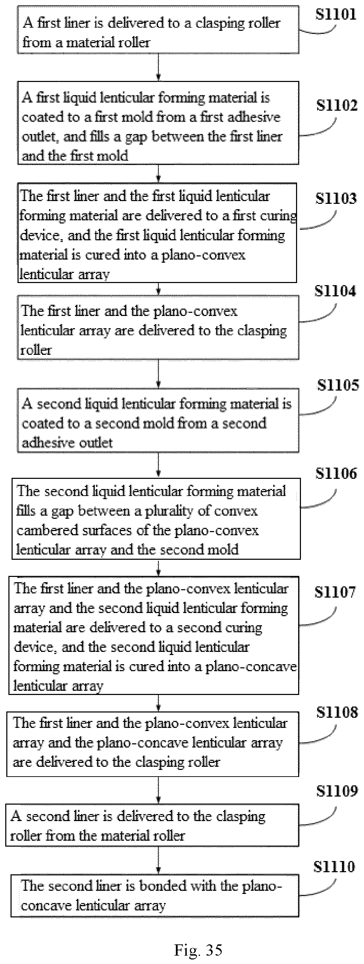

Fig. 34 shows an exemplary preparation method of the lenticular grating, and Fig. 35 illustrates a corresponding flow chart. The device used in the method differs from the device in Fig. 29 in that the second liner 114 delivered from the material roller 75 is not delivered to the second mold 32, but is delivered to a clasping roller 81 located at the downstream of the second mold 32.

The process for preparing the lenticular grating according to the present example comprises the following steps:

S1101, A material roller 70 rotates along an arrow direction to release the first liner 111, and the first liner 111 is delivered to the clasping roller 71.

S1102, A first adhesive outlet 51 at position *a* coats the first liquid lenticular forming material 41 to the peripheral surface of the first mold 31. With the rotation of the first mold 31 along the arrow direction, the first liquid lenticular forming material 41 fills the gap between the first liner 111 and the first molding surface 311. At the clasping roller 71, the first liquid lenticular forming material 41 begins to be bonded with the first liner 111.

S1103, The first liner 111 bonded with the first liquid lenticular forming material 41 marches forward to the first curing device 61. Under the action of the first curing device 61, the first liquid lenticular forming material 41 is cured into the plano-convex lenticular array.

S1104, The first liner 111 bonded with the plano-convex lenticular array is delivered to the clasping roller 76 after passing by a clasping roller 72 and a support roller 73.

S1105, The second adhesive outlet 52 at position b coats the second liquid lenticular forming material 42 to the peripheral surface of the second mold 32. The refractive index of the second liquid lenticular forming material 42 is different from the refractive index of the first liquid lenticular forming material 41.

S1106, With the rotation of the second mold 32 along the arrow direction, the second liquid lenticular forming material 42 fills the gap between the plurality of convex cambered surfaces of the plano-convex lenticular array and the second mold 32. At the clasping roller 76, the second liquid lenticular forming material 42 begins to be bonded with the convex cambered surfaces of the plano-convex lenticular array.

S1107, The first liner 111 carries the plano-convex lenticular array and the second liquid lenticular forming material 42 to march forward to the second curing device 62. Under the action of the second curing device 62, the second liquid lenticular forming material 42 is cured into the plano-concave lenticular array, the plano-concave lenticular array and the plano-convex lenticular array are bonded together in a concave-convex complementary manner, and limited by the shape of the second molding surface of the second mold 32, a surface, away from the plano-convex lenticular array, of the plano-concave lenticular array presents a plane configuration.

S1108, The first liner 111 carries the plano-convex lenticular array and the plano-concave lenticular array to reach the clasping roller 80 after passing through the clasping roller 77 and the support roller 79.

S1109, The material roller 75 rotates along the arrow direction to release the second liner 114, and the second liner 114 is delivered to the clasping roller 81 nearby the clasping roller 80.

S1110, When passing through the roller gap between the clasping roller 80 and the clasping roller 81, the second liner 114 begins to be bonded with the plane of the plano-concave lenticular array. Thus, the lenticular grating is prepared.

Thereafter, the lenticular grating is delivered to the winding roller 74.

### Example 12

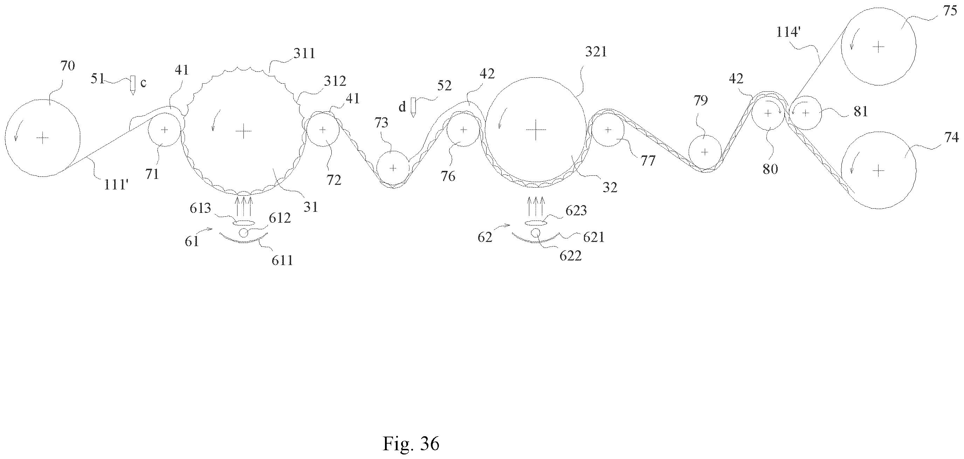

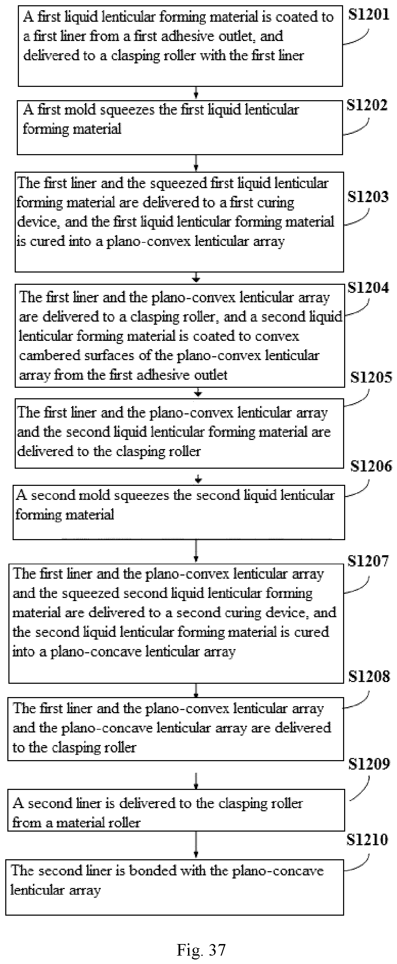

Fig. 36 shows an exemplary preparation method for the lenticular grating, and Fig. 37 shows a corresponding flow chart. The apparatus used in the method differs from the apparatus in Fig. 33 in that the first adhesive outlet 51 is not arranged at the position a, but arranged at the position c as that in Fig. 21, and the second adhesive outlet 52 is not arranged at the position b, but arranged at the position d as that in Fig. 21.

The process for preparing the lenticular grating according to the present example comprises the following steps:

S1201, The material roller 70 rotates along the arrow direction to release the first liner 111, and the first adhesive outlet 51 at the position c coats the first liquid lenticular forming material 41 to the surface of the first liner 111. The first liner 111 carries the first liquid lenticular forming material 41 to reach the clasping roller 71.

S1202, The first mold 31 rotates along the arrow direction. From the clasping roller 71, the first mold 31 squeezes the first liquid lenticular forming material 41 by means of the first molding surface 311, so that a surface, away from the first liner 111, of the first liquid lenticular forming material 41 presents a plurality of convex cambered surfaces arranged side by side.

S1203, The first liner 111 carries the squeezed first liquid lenticular forming material 41 to reach the first curing device 61. Under the action of the first curing device 61, the first liquid lenticular forming material 41 is cured into the plano-convex lenticular array.

S1204, The first liner 111 bonded with the plano-convex lenticular array marches forward to the clasping roller 76 after passing through the clasping roller 72 and the support roller 73. The second adhesive outlet 52 at the position d applies the second liquid lenticular forming material 42 to the plurality of convex cambered surfaces of the plano-convex lenticular array. The refractive index of the second liquid lenticular forming material 42 is different from the refractive index of the first liquid lenticular forming material 41. The second liquid lenticular forming material 42 is accumulated on the convex cambered surfaces of the plano-convex lenticular array and conforms to the convex cambered surfaces of the plano-convex lenticular array.

S1205, The first liner 111 carries the plano-convex lenticular array and the second liquid lenticular forming material 42 to reach the clasping roller 76.

S1206, From the clasping roller 76, the second mold 32 squeezes the surface of the second liquid lenticular forming material 42 by means of the second molding surface 321.

S1207, The first liner 111 carries the plano-convex lenticular array and the squeezed second liquid lenticular forming material 42 to march forward to the second curing device 62. Under the action of the second curing device 62, the second liquid lenticular forming material 42 is cured into the plano-concave lenticular array, the plano-concave lenticular array and the plano-convex lenticular array are bonded together in a concave-convex complementary manner, and limited by the shape of the second molding surface of the second mold 32, a surface, away from the plano-convex lenticular array, of the plano-concave lenticular array presents a plane configuration.

S1208, The first liner 111 carries the plano-convex lenticular array and the plano-concave lenticular array to reach the clasping roller 80 after passing through the clasping roller 77 and the support roller 79.

S1209, The material roller 75 rotates along the arrow direction to release the second liner 114, and the second liner 114 is delivered to the clasping roller 81 nearby the clasping roller 80.

S1210, When passing through the roller gap between the clasping roller 80 and the clasping roller 81, the second liner 114 begins to be bonded with the plane of the plano-concave lenticular array. Thus, the lenticular grating is prepared.

Thereafter, the lenticular grating is delivered to the winding roller 74.

The steps involved in the above embodiments may be arbitrarily combined with the steps of other embodiments on the premise of not violating the purpose of embodiments of the present disclosure, and the processing tools used in the above embodiments and features thereof, such as the first mold 31 and the first molding surface thereof, the second mold 32 and the second molding surface thereof, are interchangeable.

Furthermore, for the purpose of convenience of description in the above examples, the process steps S are labeled with serial numbers, such as S101, S102 ... S111, but are not intended to limit the sequence of steps. On the premise of not violating the purpose of embodiments of the present disclosure, the sequence of the steps may be adjusted. For example, the step S905 in the example 9 may be implemented simultaneously with any of steps S901 to S904 or implemented before the step S901.

Although the above examples 1 to 12 all use the first mold with the concave cambered surfaces to mold the plano-convex lenticular array first, and then use the second mold with the flat surface to further mold the plano-concave lenticular array conforming to the plano-convex lenticular array, those skilled in the art will understand that in other modified examples, the mold with the convex cambered surfaces may be used to mold the plano-concave lenticular array first, and then the mold with the flat surface is used to further mold the plano-convex lenticular array conforming to the plano-concave lenticular array.

The above description and drawings sufficiently illustrate embodiments of the present disclosure to enable those skilled in the art to practice them. Other embodiments may comprise structural, process, and other changes. Embodiments represent only possible changes. Unless expressly required, individual components and functions are optional and the order of operations may be changed. Parts and features of some embodiments may be included in or substituted for parts and features of other embodiments. The scope of the embodiments of the present disclosure includes the full scope of the claims, and all available equivalents of the claims. When used in the present application, although the terms of "first", "second", etc. may be possibly used in the present application to describe various elements, these elements should not be limited by these terms. These terms are only used to distinguish one element from another. For example, without changing the meaning of the description, a first element may be called as a second element, and similarly, the second element may be called as the first element, as long as all of "the first elements" that appear are consistently renamed and all of "the second elements" that appear are consistently renamed. The first element and the second element are both elements, but may not be the same element. Moreover, the terms used in the present application are used to describe embodiments only and not to limit the claims. As used in the illustration of embodiments and the claims, unless clearly indicated in the context, the singular forms "a", "an" and "the" are also intended to include the plural forms. In addition, when used in the present application, the term "comprise", "comprises", "comprising", etc., refer to the presence of stated features, integers, steps, operations, elements, and/or components, but does not preclude the presence or addition of one or more other features, integers, steps, operations, elements, components and/or groupings of these. Without further limitations, an element limited by the phrase "comprises a..." does not preclude the presence of additional identical elements in the process, method or device that includes the element. Herein, the difference of each embodiment from each other may be the focus of explanation. The same and similar parts among all of embodiments may be referred to each other. For the method and product disclosed by the embodiments, if the method and product correspond to a method part disclosed by the embodiments, the description of the method part can be referred to for the related part.

Those skilled in the art may use different methods for implementing the described functions for each particular application, but such implementations should not be considered beyond the scope of the embodiments of the present disclosure. Those skilled in the art may clearly understand that, for the convenience and brevity of description, the corresponding processes in the above method embodiments may be referred to for the specific working processes of the above systems, devices and units, which will not be repeated here.

## Claims

1. A lenticular optical composite film, comprising:
a first polarizer; and
a lenticular grating, bonded with the first polarizer, comprising a first lenticular array and a second lenticular array;
wherein surfaces, away from each other, of the first lenticular array and the second lenticular array are planes, and surfaces, facing each other, of the first lenticular array and the second lenticular array are concave-convex complementary, and the first polarizer is attached to the lenticular grating.

2. The lenticular optical composite film according to claim 1, wherein one lenticular array of the first lenticular array and the second lenticular array is a plano-convex lenticular array, and the other lenticular array is a plano-concave lenticular array, wherein
one surface of the plano-convex lenticular array is a plane, and an opposite other surface is formed with a plurality of convex cambered surfaces arranged side by side; or, one surface of the plano-concave lenticular array is a plane, and an opposite other surface is formed with a plurality of concave cambered surfaces complementary to the plurality of convex cambered surfaces of the plano-convex lenticular array;
a refractive index of the plano-convex lenticular array is greater than a refractive index of the plano-concave lenticular array.

3. The lenticular optical composite film according to claim 2, wherein a difference n△ between the refractive index of the plano-convex lenticular array and the refractive index of the plano-concave lenticular array is 0.1≤n△≤0.3.

4. The lenticular optical composite film according to claim 2, wherein
the refractive index n1 of the plano-convex lenticular array is 1.56≤n1≤1.66; or
the refractive index n2 of the plano-concave lenticular array is 1.36≤n2≤1.46.

5. The lenticular optical composite film according to any one of claims 1-4, wherein the lenticular grating comprises a pair of liners spaced apart, wherein
a surface, away from a second liner, of a first liner of the pair of liners is bonded with the first polarizer, the first lenticular array and the second lenticular array are clamped between the pair of liners, and the planes of the first lenticular array and the second lenticular array are bonded with one liner of the pair of liners respectively.

6. The lenticular optical composite film according to any one of claims 1-4, wherein the first polarizer comprises:
a pair of support films spaced apart; and
a polarizing film clamped between the pair of support films and having an absorption axis;
wherein the lenticular grating is bonded with one support film of the pair of support films.

7. The lenticular optical composite film according to any one of claims 1-4, further comprising:
a protective film attached to a surface, away from the first polarizer, of the lenticular grating.

8. The lenticular optical composite film according to any one of claims 1-4, further comprising:
a release film attached to the surface, away from the lenticular grating, of the first polarizer.

9. A 3D display, comprising:
a display panel layer; and
the lenticular optical composite film of any one of claims 1-7;
wherein the display panel layer is bonded with the first polarizer of the lenticular optical composite film.

10. The 3D display according to claim 9, wherein the display panel layer comprises:
a pair of glass substrates spaced apart;
a color filter attached to a surface, facing a second glass substrate, of a first glass substrate of the pair of glass substrates;
a thin film transistor attached to a surface, facing the first glass substrate, of the second glass substrate;
a second polarizer attached to a surface, away from the first glass substrate, of the second glass substrate; and
a liquid crystal layer arranged between the pair of glass substrates;
wherein the first polarizer of the lenticular optical composite film is attached to the surface, away from the second glass substrate, of the first glass substrate.

11. A preparation method for a lenticular optical composite film, comprising:
forming a lenticular grating; comprising forming a first lenticular array, forming a second lenticular array, making surfaces, facing each other, of the first lenticular array and the second lenticular array concave-convex complementary, and making surfaces, away from each other, of the first lenticular array and the second lenticular array formed into planes;
attaching a polarizer to the lenticular grating, so as to obtain the lenticular optical composite film.

12. The preparation method according to claim 11, wherein forming the first lenticular array, and forming the second lenticular array comprises:
forming one of the first lenticular array and the second lenticular array as a plano-convex lenticular array with one surface being a plane and an opposite other surface being formed with a plurality of convex cambered surfaces arranged side by side; and
forming the other one of the first lenticular array and the second lenticular array as a plano-concave lenticular array with one surface being a plane and an opposite other surface being formed with a plurality of concave cambered surfaces complementary to the plurality of convex cambered surfaces of the plano-convex lenticular array;
wherein a refractive index of the plano-convex lenticular array is greater than a refractive index of the plano-concave lenticular array.

13. The preparation method according to claim 11, further comprising:
attaching a protective film to a surface, away from the polarizer, of the lenticular grating; or
attaching a release film to a surface, away from the lenticular grating, of the polarizer.

14. The preparation method according to claim 11, wherein forming the lenticular grating comprises:
providing a first liner, a second liner, a first liquid lenticular forming material and a second liquid lenticular forming material; providing a first mold with a first molding surface, wherein the first molding surface is constructed as a plurality of cambered surfaces arranged side by side; providing a second mold with a second molding surface, wherein the second molding surface is constructed as a flat surface;
making the first liquid lenticular forming material formed into the first lenticular array on the first liner by means of the first molding surface of the first mold; and
making the second liquid lenticular forming material formed into the second lenticular array that is between the first lenticular array and the second liner and is concave-convex complementary to the first lenticular array by means of the second molding surface of the second mold.

15. The preparation method according to claim 14, wherein making the first liquid lenticular forming material formed into the first lenticular array on the first liner by means of the first molding surface of the first mold comprises:
coating the first liquid lenticular forming material to the first liner;
squeezing a surface, away from the first liner, of the first liquid lenticular forming material by the first molding surface of the firsts mold; and
performing curing treatment to the squeezed first liquid lenticular forming material, to form the first lenticular array.

16. The preparation method according to claim 14, wherein making the first liquid lenticular forming material formed into the first lenticular array on the first liner by means of the first molding surface of the first mold comprises:
positioning the first mold relative to the first liner, so that a gap exists between the first molding surface of the first mold and the first liner;
filling the gap with the first liquid lenticular forming material; and
performing curing treatment on the first liquid lenticular forming material in the gap, to form the first lenticular array.

17. The preparation method according to claim 14, wherein making the second liquid lenticular forming material formed into the second lenticular array that is between the first lenticular array and the second liner material and is concave-convex complementary to the first lenticular array by means of the second molding surface of the second mold comprises:
coating the second liquid lenticular forming material to a surface, away from the first liner, of the first lenticular array;
squeezing a surface, away from the first lenticular array, of the second liquid lenticular forming material by the second molding surface of the second mold;
performing curing treatment to the squeezed second liquid lenticular forming material, to form the second lenticular array that is concave-convex complementary to the first lenticular array;
making the second mold leave the second lenticular array; and
attaching the second liner to a surface, away from the first lenticular array, of the second lenticular array.

18. The preparation method according to claim 14, wherein making the second liquid lenticular forming material formed into the second lenticular array that is between the first lenticular array and the second liner and is concave-convex complementary to the first lenticular array by means of the second molding surface of the second mold comprises:
coating the second liquid lenticular forming material to the second liner;
attaching a surface, away from the second liner, of the second liquid lenticular forming material to a surface, away from the first liner, of the first lenticular array;
squeezing a surface, away from the second liquid lenticular forming material, of the second liner by the second molding surface of the second mold; and
performing curing treatment to the squeezed second liquid lenticular forming material, to form the second lenticular array that is concave-convex complementary to the first lenticular array.

19. The preparation method according to claim 14, wherein making the second liquid lenticular forming material formed into the second lenticular array that is between the first lenticular array and the second liner and is concave-convex complementary to the first lenticular array by means of the second molding surface of the second mold comprises:
positioning the second mold relative to the first lenticular array, so that a gap exists between the second molding surface of the second mold and a surface, away from the first liner, of the first lenticular array;
filling the gap with the second liquid lenticular forming material;
performing curing treatment to the second liquid lenticular forming material in the gap, to form the second lenticular array that is concave-convex complementary to the first lenticular array;
making the second mold leave the second lenticular array; and
attaching the second liner to a surface, away from the first lenticular array, of the second lenticular array.

20. The preparation method according to claim 14, wherein making the second liquid lenticular forming material formed into the second lenticular array that is between the first lenticular array and the second liner and is concave-convex complementary to the first lenticular array by means of the second molding surface of the second mold comprises:
placing the second liner on the second molding surface of the second mold;
positioning the second mold relative to the first lenticular array, so that a gap exists between the second liner and a surface, away from the first liner, of the first lenticular array;
filling the gap with the second liquid lenticular forming material; and
performing curing treatment to the second liquid lenticular forming material in the gap, to form the second lenticular array that is concave-convex complementary to the first lenticular array.
